(19) Europäisches Patentamt / European Patent Office / Office européen des brevets

(11) **EP 3 996 338 A1**

(12) **EUROPEAN PATENT APPLICATION**
published in accordance with Art. 153(4) EPC

(43) Date of publication:
**11.05.2022 Bulletin 2022/19**

(21) Application number: **20846520.3**

(22) Date of filing: **17.07.2020**

(51) International Patent Classification (IPC):
**H04L 12/911** (2013.01)

(52) Cooperative Patent Classification (CPC):
**H04L 5/00**

(86) International application number:
**PCT/CN2020/102533**

(87) International publication number:
**WO 2021/017888 (04.02.2021 Gazette 2021/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.07.2019 CN 201910682324**

(71) Applicant: **Huawei Technologies Co., Ltd.**
**Longgang District**
**Shenzhen**
**Guangdong 518129 (CN)**

(72) Inventors:
• **ZHU, Zhigang**
  **Shenzhen, Guangdong 518129 (CN)**
• **ZHONG, Qiwen**
  **Shenzhen, Guangdong 518129 (CN)**
• **YANG, Chunsheng**
  **Shenzhen, Guangdong 518129 (CN)**

(74) Representative: **Maiwald Patent- und Rechtsanwaltsgesellschaft mbH**
**Engineering**
**Elisenhof**
**Elisenstrasse 3**
**80335 München (DE)**

(54) **SERVICE DATA TRANSMISSION METHOD AND COMMUNICATION APPARATUS**

(57) This application provides a service data transmission method and a communication apparatus. The method includes: generating a multiplex sequence, where the multiplex sequence includes M data units, M is an integer greater than or equal to 2, the multiplex sequence carries N pieces of service data, and N is a positive integer less than or equal to M; and sending the multiplex sequence and first information, where the first information is used to indicate a quantity of data units occupied by each of the N pieces of service data in the multiplex sequence. In the method provided in this application, during service data transmission, information about a data unit occupied by each piece of service data is transmitted, instead of information about service data occupied by each data unit.

FIG. 3

EP 3 996 338 A1

**Description**

This application claims priority to Chinese Patent Application No. 201910682324.0, filed with the China National Intellectual Property Administration on July 26, 2019 and entitled "SERVICE DATA TRANSMISSION METHOD AND COMMUNICATION APPARATUS", which is incorporated herein by reference in its entirety.

**TECHNICAL FIELD**

This application relates to the communication field, and in particular, to a service data transmission method and a communication apparatus.

**BACKGROUND**

The optical internetworking forum, a standardization organization, has completed standardization of the flexible Ethernet (flexible Ethernet, FlexE) 1.0. In the FlexE 1.0 standard, one 100 GB Ethernet interface is divided into 20 FlexE slots (slot), and a bandwidth of each FlexE slot is 5 Gbps. Because the bandwidth of one FlexE slot is 5 Gbps, an available minimum transmission bandwidth (pipe) is 5 Gbps during data transmission. To reduce the bandwidth corresponding to each slot, the 100 GB Ethernet interface may be divided into more FlexE slots. However, because a quantity of FlexE slots is excessively large, and a FlexE calendar (FlexE Calendar) needs to be established for each FlexE slot, to indicate a service to which the FlexE slot belongs, costs of transmitting and managing the FlexE calendar are high. Therefore, how to reduce a quantity of transmitted FlexE calendars and transmission costs becomes an urgent problem to be resolved at present.

**SUMMARY**

This application provides a service data transmission method and a communication apparatus. During service data transmission, information about a data unit occupied by each piece of service data is transmitted, instead of information about service data occupied by each data unit (for example, a FlexE calendar of each data unit). This can effectively reduce an amount of service-related information that needs to be transmitted, and reduce a resource required for transmitting service data-related information, to save transmission resources, reduce costs of maintaining the service data-related information, and improve communication efficiency.

According to a first aspect, a service data transmission method is provided. The method may be performed by a sending device or a chip applied to a sending device. For example, the sending device may be a switch or a router. The method includes: generating a multiplex sequence, where the multiplex sequence includes M data units, M is an integer greater than or equal to 2, the multiplex sequence carries N pieces of service data, and N is a positive integer less than or equal to M; and sending the multiplex sequence and first information, where the first information is used to indicate a quantity of data units occupied by each of the N pieces of service data in the multiplex sequence.

According to the service data transmission method provided in the first aspect, during service data transmission, only information about a data unit (for example, the quantity of data units) occupied, in the multiplex sequence, by each piece of service data that is multiplexed and transmitted in the multiplex sequence needs to be sent to a receiving device, to implement accurate transmission and parsing of the multiplexed service data in the multiplex sequence. Information about a service occupied by each data unit does not need to be transmitted. Therefore, when the quantity of data units is large, a resource required for transmitting information occupied by the service data can be effectively reduced, to save transmission resources, reduce costs of maintaining the information occupied by the service data, and improve communication efficiency.

In a possible implementation of the first aspect, the method further includes: determining a data unit occupied by each of the N pieces of service data in the multiplex sequence based on the quantity of data units occupied by each of the N pieces of service data in the multiplex sequence. In this implementation, a location of the data unit in the multiplex sequence is determined based on the quantity of data units occupied by each of the N pieces of service data in the multiplex sequence. This is easy to implement and less complex. In addition, the determined location of the data unit in the multiplex sequence is more accurate.

In a possible implementation of the first aspect, the determining a data unit occupied by each of the N pieces of service data in the multiplex sequence based on the quantity of data units occupied by each of the N pieces of service data in the multiplex sequence includes: determining the location of the data unit occupied by each of the N pieces of service data in the multiplex sequence based on a sequence of the N pieces of service data and the quantity of data units occupied by each piece of service data in the multiplex sequence, where data units occupied by a same piece of service data are arranged continuously. In this implementation, the data units occupied by the same piece of service data are arranged continuously in the multiplex sequence. This is easy to implement. Therefore, the sending device can accurately and quickly determine a location of a data unit occupied by each piece of service data in the multiplex sequence. This reduces complexity of determining the location of the data unit occupied by each piece of service data in the multiplex sequence, saves resources, and implements accurate transmission and parsing of the multiplexed service data in the multiplex sequence.

In a possible implementation of the first aspect, the determining a data unit occupied by each of the N pieces of service data in the multiplex sequence based on the quantity of data units occupied by each of the N pieces of service data in the multiplex sequence includes: determining the location of the data unit occupied by each of the N pieces of service data in the multiplex sequence based on the quantity of data units occupied by each of the N pieces of service data in the multiplex sequence and a value of M, where data units occupied by a same piece of service data are arranged discontinuously. In this implementation, the data units occupied by the same piece of service data are arranged discontinuously. This can avoid congestion of service data caused by continuous arrangement of data units occupied by a same piece of service data, and improve accuracy of service data transmission and parsing, to improve accuracy of data transmission, and implement accurate transmission and parsing of the multiplexed service data in the multiplex sequence.

In a possible implementation of the first aspect, the method further includes: sending second information and/or third information, where the second information is used to indicate the value of M, and the third information is used to indicate a value of N. In this implementation, indication information used to indicate M and/or N is sent to the receiving device. Therefore, the receiving device can accurately and quickly determine the location of the data unit occupied by each piece of service data in the multiplex sequence. This implements accurate parsing of the multiplexed service data in the multiplex sequence.

In a possible implementation of the first aspect, each data unit corresponds to one or more code blocks, the first information is carried in at least one multiplex overhead MOH code block, and the multiplex sequence includes the at least one MOH code block. In this implementation, a parameter related to the multiplex sequence is transmitted by using the MOH code block in the multiplex sequence without using extra resources, to save resources. In addition, the parameter related to the multiplex sequence and the multiplex sequence are simultaneously transmitted. This improves transmission efficiency, helps the receiving device to conveniently and quickly obtain the parameter related to the multiplex sequence, and therefore improves communication efficiency.

In a possible implementation of the first aspect, a code block stream includes the multiplex sequence, the at least one MOH code block is a control code block, the at least one MOH code block is further used to determine a location of the multiplex sequence in the code block stream, and a data unit in which the at least one MOH code block is located is the first data unit in the multiplex sequence. In this implementation, the MOH code block used to position the multiplex sequence in the code block stream is disposed in the multiplex sequence. This can conveniently and quickly position the multiplex sequence, and improve efficiency and accuracy of positioning the multiplex sequence in the code block stream.

In a possible implementation of the first aspect, the multiplex sequence is carried in one or more flexible Ethernet FlexE slots. In this implementation, the multiplex sequence is generated in the code block stream of the one or more FlexE slots and is sent to the receiving device, so that bandwidth division of the FlexE slot may be smaller. This implements flexible bandwidth division of the FlexE slot. Therefore, flexible bandwidth allocation ensures an isolation requirement of a low-bandwidth service and improves bearer efficiency.

In a possible implementation of the first aspect, the value of M is an integer multiple or a divisor of 1023, a start location of the multiplex sequence overlaps with the first code block that is in a FlexE frame and that is in the code block stream of the FlexE slot or overlaps with the first code block that is in a FlexE frame and that is in the code block stream of the FlexE slot in a fixed periodicity, and each data unit corresponds to one or more code blocks. In this implementation, the receiving device can quickly and accurately locate the multiplex sequence in the code block stream of the FlexE slot, to improve efficiency and accuracy of obtaining the multiplex sequence. In addition, the receiving device does not need to be notified of location information of the multiplex sequence, to reduce signaling overheads.

In a possible implementation of the first aspect, a FlexE frame includes a first overhead OH code block, the first OH code block is used to transmit a first parameter and a second parameter, the first parameter is used to indicate the value of M, the second parameter is used to indicate an offset between the first data unit in the multiplex sequence and the first code block that is in the FlexE frame and that is in the code block stream of the FlexE slot, and each data unit corresponds to one or more code blocks. In this implementation, the first OH code block is used to transmit M and the offset between a start location of the multiplex sequence and the first code block that is in the FlexE frame and that is in the code block stream of the FlexE slot. Therefore, the receiving device can quickly and accurately locate the multiplex sequence in the code block stream of the FlexE slot, to improve efficiency and accuracy of obtaining the multiplex sequence.

In a possible implementation of the first aspect, N FlexE multiframes include N second OH code blocks corresponding to the FlexE slots, an ith second OH code block in the N second OH code blocks is used to transmit a multiplex enabling identifier and a multiplex identifier of an ith piece of service data in the N pieces of service data, the multiplex enabling identifier is used to indicate that a plurality of pieces of service data are transmitted in the code block stream of the FlexE slot, the multiplex identifier of the ith piece of service data is used to identify the ith piece of service data, i is a positive integer less than or equal to N, and each data unit corresponds to one or more code blocks. In this implementation, the receiving device is notified of the value of N by using the FlexE multiframe without using extra resources, to reduce signaling overheads.

In a possible implementation of the first aspect, the FlexE frame includes a third overhead OH code block, and the first information is carried in the third OH code block. In this implementation, the first information is carried in the third OH code block and transmitted to the receiving device, and the receiving device is notified of the first information without using extra resources, to reduce signaling overheads.

In a possible implementation of the first aspect, the FlexE multiframe includes T fourth OH code blocks, and the T fourth OH code blocks are used to transmit the value of M. In this implementation, the fourth OH code blocks are received to transmit the value of M, and the receiving device is notified of the value of M without using extra resources, to reduce signaling overheads.

In a possible implementation of the first aspect, the multiplex sequence is periodic, or continuous and duplicate.

According to a second aspect, a service data transmission method is provided. The method may be performed by a receiving device or a chip applied to a receiving device. For example, the receiving device may be a switch or a router. The method includes: obtaining a multiplex sequence and first information, where the multiplex sequence includes M data units, M is an integer greater than or equal to 2, the multiplex sequence carries N pieces of service data, N is a positive integer less than or equal to M, and the first information is used to indicate a quantity of data units occupied by each of the N pieces of service data in the multiplex sequence; determining a data unit occupied by each of the N pieces of service data in the multiplex sequence based on the first information; and determining the N pieces of service data based on the data unit occupied by each of the N pieces of service data in the multiplex sequence.

According to the service data transmission method provided in the second aspect, during service data transmission, only the multiplex sequence and information about the data unit (for example, the quantity of data units) occupied, in the multiplex sequence, by each piece of service data that is multiplexed and transmitted in the multiplex sequence needs to be received, to implement accurate parsing of the multiplexed service data in the multiplex sequence. This can effectively reduce a resource required for transmitting information occupied by the service data, to save transmission resources, reduce costs of maintaining the information occupied by the service data, and improve communication efficiency.

In a possible implementation of the second aspect, the determining a data unit occupied by each of the N pieces of service data in the multiplex sequence based on the first information includes: determining the location of the data unit occupied by each of the N pieces of service data in the multiplex sequence based on a sequence of the N pieces of service data and the quantity of data units occupied by each piece of service data in the multiplex sequence, where data units occupied by a same piece of service data are arranged continuously. In this implementation, the data units occupied by the same piece of service data are arranged continuously in the multiplex sequence. This is easy to implement. Therefore, the receiving device can accurately and quickly determine a location of a data unit occupied by each piece of service data in the multiplex sequence. This reduces complexity of determining the location of the data unit occupied by each piece of service data in the multiplex sequence, saves resources, and implements accurate parsing of the multiplexed service data in the multiplex sequence.

In a possible implementation of the second aspect, the determining a data unit occupied by each of the N pieces of service data in the multiplex sequence based on the first information includes: determining the location of the data unit occupied by each of the N pieces of service data in the multiplex sequence based on the quantity of data units occupied by each of the N pieces of service data in the multiplex sequence and a value of M, where data units occupied by a same piece of service data are arranged discontinuously. In this implementation, the data units occupied by the same piece of service data are arranged discontinuously. This can avoid congestion of service data caused by continuous arrangement of data units occupied by a same piece of service data, and improve accuracy of service data transmission and parsing, to improve accuracy of data transmission, and implement accurate transmission and parsing of the multiplexed service data in the multiplex sequence.

In a possible implementation of the second aspect, the method further includes: receiving second information and/or third information, where the second information is used to indicate the value of M, and the third information is used to indicate a value of N. In this implementation, indication information used to indicate M and/or N is received. Therefore, the receiving device can accurately and quickly determine the location of the data unit occupied by each piece of service data in the multiplex sequence.

In a possible implementation of the second aspect, each data unit corresponds to one or more code blocks, the first information is carried in at least one multiplex overhead MOH code block, and the multiplex sequence includes the at least one MOH code block. In this implementation, a parameter related to the multiplex sequence is transmitted by using the MOH code block in the multiplex sequence without using extra resources, to save resources. In addition, the parameter related to the multiplex sequence and the multiplex sequence are simultaneously transmitted. This improves transmission efficiency, helps the receiving device to conveniently and quickly obtain the parameter related to the multiplex sequence, and therefore improves communication efficiency.

In a possible implementation of the second aspect, the obtaining a multiplex sequence includes: obtaining the multiplex sequence from a code block stream based on the at least one MOH code block, where the at least one MOH code block is a control code block, the at least one MOH code block is further used to determine a location of the multiplex sequence in the code block stream, and a data unit in which the at least one MOH code block is located is the first data unit in the multiplex sequence. In this implementation, the MOH code block used to position the multiplex sequence in the code block stream is disposed in the multiplex sequence. This can conveniently and quickly position the multiplex sequence, and improve efficiency and accuracy of positioning the multiplex sequence in the code block stream.

In a possible implementation of the second aspect, the obtaining a multiplex sequence includes: obtaining the multiplex sequence from one or more flexible Ethernet FlexE slots. In this implementation, bandwidth division of the FlexE slot may be smaller. This implements flexible bandwidth division of the FlexE slot. Therefore, flexible bandwidth allocation ensures an isolation requirement of a low-bandwidth service and improves bearer efficiency.

In a possible implementation of the second aspect, the value of M is an integer multiple or a divisor of 1023, a start location of the multiplex sequence overlaps with the first code block that is in a FlexE frame and that is in the code block stream of the FlexE slot, and each data unit corresponds to one or more code blocks; and the obtaining the multiplex sequence from one or more flexible Ethernet FlexE slots includes: obtaining the multiplex sequence from the code block stream of the FlexE slot based on M and the first code block that is in the FlexE frame and that is in the code block stream of the FlexE slot. In this implementation, the receiving device can quickly and accurately locate the multiplex sequence in the code block stream of the FlexE slot, to improve efficiency and accuracy of obtaining the multiplex sequence. In addition, the receiving device does not need to be notified of location information of the multiplex sequence, to reduce signaling overheads.

In a possible implementation of the second aspect, a FlexE frame includes a first overhead OH code block, the first OH code block is used to transmit a first parameter and a second parameter, the first parameter is used to indicate the value of M, the second parameter is used to indicate an offset between the first data unit in the multiplex sequence and the first slot that is in the FlexE frame and that is in the code block stream of the FlexE slot, and each data unit corresponds to one or more code blocks; and the obtaining the multiplex sequence from one or more flexible Ethernet FlexE slots includes: obtaining the multiplex sequence from the code block stream of the FlexE slot based on the first parameter and the second parameter. In this implementation, the first OH code block is used to transmit M and the offset between a start location of the multiplex sequence and the first code block that is in the FlexE frame and that is in the code block stream of the FlexE slot. Therefore, the receiving device can quickly and accurately locate the multiplex sequence in the code block stream of the FlexE slot, to improve efficiency and accuracy of obtaining the multiplex sequence.

In a possible implementation of the second aspect, N FlexE multiframes include N second OH code blocks corresponding to the FlexE slots, an $i^{th}$ second OH code block in the N second OH code blocks is used to transmit a multiplex enabling identifier and a multiplex identifier of an $i^{th}$ piece of service data in the N pieces of service data, the multiplex enabling identifier is used to indicate that a plurality of pieces of service data are transmitted in the code block stream of the FlexE slot, the multiplex identifier of the $i^{th}$ piece of service data is used to identify the $i^{th}$ piece of service data, i is a positive integer less than or equal to N, and each data unit corresponds to one or more code blocks; and the method further includes: determining N based on the N second OH code blocks. In this implementation, the receiving device is notified of the value of N by using the FlexE multiframe without using extra resources, to reduce signaling overheads.

In a possible implementation of the second aspect, the FlexE frame includes a third OH code block, and the third OH code block is used to transmit the first information.

In a possible implementation of the second aspect, the FlexE multiframe includes T fourth OH code blocks, and the T fourth OH code blocks are used to transmit the value of M; and the method further includes: determining M based on the T fourth OH code blocks. In this implementation, the fourth OH code blocks are received to obtain the value of M, and the receiving device is notified of the value of M without using extra resources, to reduce signaling overheads.

According to a third aspect, a communication apparatus is provided. The apparatus includes a unit configured to perform steps in the first aspect or any possible implementation of the first aspect.

According to a fourth aspect, a communication apparatus is provided. The apparatus includes a unit configured to perform steps in the second aspect or any possible implementation of the second aspect.

In a design, the communication apparatus is a communication chip. The communication chip may include an input circuit or an interface configured to send information or data, and an output circuit or an interface configured to receive information or data.

In another design, the communication apparatus is a communication device (for example, a switch or a router), and the communication chip may include a transmitter configured to send information or data, and a receiver configured to receive information or data.

According to a fifth aspect, a communication apparatus is provided. The apparatus includes at least one processor and a memory. The at least one processor obtains a program or instructions in the memory, and is configured to execute the program or the instructions, to enable the communication apparatus to perform the method in the first aspect or any possible implementation of the first aspect.

According to a sixth aspect, a communication apparatus is provided. The apparatus includes at least one processor and a memory. The at least one processor obtains a program or instructions in the memory, and is configured to execute the program or the instructions, to enable the communication apparatus to perform the method in the second aspect or any possible implementation of the second aspect.

According to a seventh aspect, a communication apparatus is provided. The apparatus includes at least one processor and an interface circuit. The interface circuit is used by the at least one processor to obtain a program or instructions in at least one memory, and the at least one processor is configured to execute the program or the instructions, to enable the communication apparatus to perform the method in the first aspect or any possible implementation of the first aspect.

According to an eighth aspect, a communication apparatus is provided. The apparatus includes at least one processor and an interface circuit. The interface circuit is used by the at least one processor to obtain a program or instructions in at least one memory, and the at least one processor is configured to execute the program or the instructions, to enable the communication apparatus to perform the method in the second aspect or any possible implementation of the second aspect.

According to a ninth aspect, a processor is provided. The processor includes an input circuit, an output circuit, and a processing circuit. The processing circuit is configured to receive a signal by using the input circuit, and send a signal by using the output circuit, to enable the processor to perform the method in the first aspect or any possible implementation of the first aspect, or the method in the second aspect or any possible implementation of the second aspect.

During specific implementation, the processor may be a chip, the input circuit may be an input pin, the output circuit may be an output pin, and the processing circuit may be a transistor, a gate circuit, a trigger, any logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the circuits are not limited in this embodiment of this application.

According to a tenth aspect, a communication system is provided, including: the communication apparatus provided in the third aspect and the communication apparatus provided in the fourth aspect, or the communication apparatus provided in the fifth aspect and the communication apparatus provided in the sixth aspect, or the communication apparatus provided in the seventh aspect and the communication apparatus provided in the eighth aspect.

According to an eleventh aspect, a computer program product is provided. The computer program product includes a computer program, and when the computer program is executed by a processor, the method in the first aspect or any possible implementation of the first aspect, or the method in the second aspect or any possible implementation of the second aspect is implemented.

According to a twelfth aspect, a computer-readable storage medium is provided. The computer-readable storage medium stores a computer program. When the computer program is executed, the method in the first aspect or any possible implementation of the first aspect, or the method in the second aspect or any possible implementation of the second aspect is performed.

In the solution provided in this application, during service data transmission, the information about the data unit occupied by each piece of service data is transmitted, instead of the information about the service data occupied by each data unit. This can effectively reduce an amount of service-related information that needs to be transmitted, and reduce a resource required for transmitting service data-related information, to save transmission resources, reduce costs of maintaining the service data-related information, and improve communication efficiency.

**BRIEF DESCRIPTION OF DRAWINGS**

FIG. 1 is a schematic diagram of a structure of a FlexE row;
FIG. 2 is a schematic diagram of a frame structure of a FlexE frame;
FIG. 3 is a schematic interaction diagram of an example of a service data transmission method according to an embodiment of this application;
FIG. 4 is a schematic diagram of an example of continuous arrangement of data units occupied by each multiplex service according to an embodiment of this application;

FIG. 5 is a schematic diagram of an example of discontinuous arrangement of data units occupied by each multiplex service according to an embodiment of this application;

FIG. 6 is a schematic interaction diagram of another example of a service data transmission method according to an embodiment of this application;

FIG. 7 is a schematic diagram of an example of generating a multiplex sequence in a code block stream according to an embodiment of this application;

FIG. 8 is a schematic interaction diagram of another example of a service data transmission method according to an embodiment of this application;

FIG. 9 is a schematic diagram of a communication apparatus according to an embodiment of this application;

FIG. 10 is a schematic diagram of another communication apparatus according to an embodiment of this application;

FIG. 11 is a schematic diagram of a communication apparatus according to an embodiment of this application; and

FIG. 12 is a schematic diagram of another communication apparatus according to an embodiment of this application.

## DESCRIPTION OF EMBODIMENTS

The following describes technical solutions in this application with reference to the accompanying drawings.

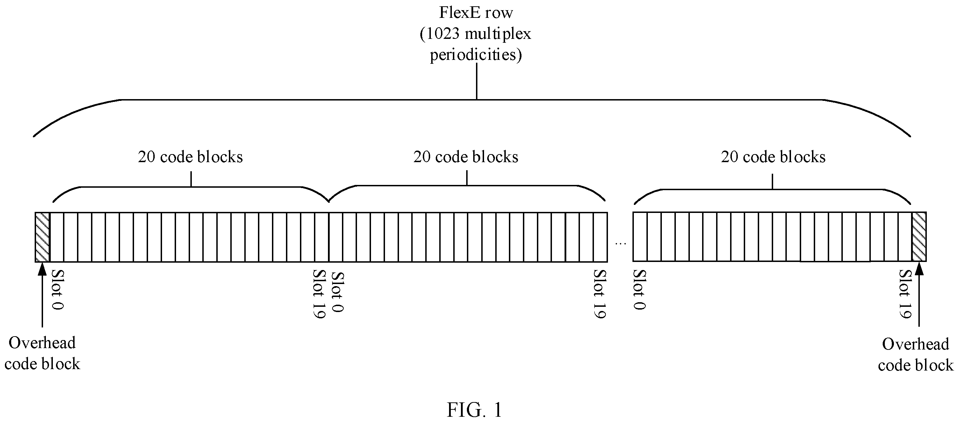

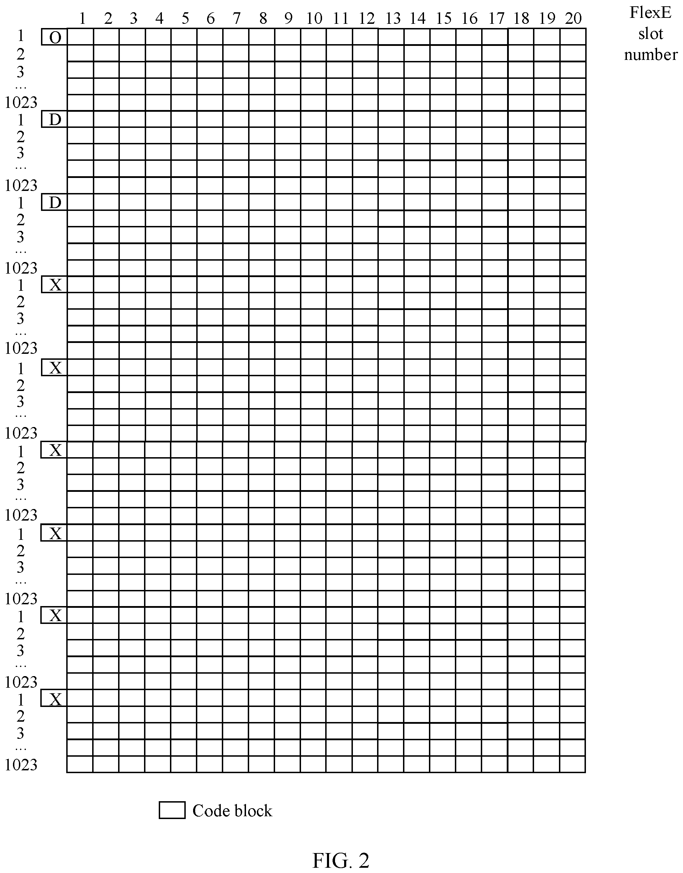

In the FlexE 1.0 standard, one 100 GB Ethernet interface (which may also be referred to as a FlexE logical interface) is divided into 20 FlexE slots (slot), and a bandwidth of each FlexE slot is 5 Gbps. Division into FlexE slots is based on a 64B/66B transmission code block at an Ethernet physical coding sublayer, a transmission time period of 20 continuous 64B/66B code blocks is used as one time division multiplexing (time division multiplexing, TDM) periodicity, and transmission time of each code block (block) is one FlexE slot. In other words, each code block corresponds to one FlexE slot, one FlexE overhead (overhead, OH) code block is inserted into every 1023 multiplex periodicities as one FlexE row, eight FlexE rows are used as one FlexE frame, 32 FlexE frames (256 FlexE rows) are used as one FlexE multiframe, and the overhead code block may be understood as a field/time slice/code block used to transmit information related to control and management during data transmission. FIG. 1 is a schematic diagram of a structure of a FlexE row. Each FlexE row (20 x 1023 multiplex periodicities) includes only one FlexE overhead code block. Each FlexE frame includes eight FlexE overhead code blocks. For one FlexE frame, one FlexE slot corresponds to 8 x 1023 code blocks. For one FlexE multiframe, one FlexE slot corresponds to 32 x 8 x 1023 code blocks. FIG. 2 is a schematic diagram of a frame structure of a FlexE frame. Eight FlexE rows are used as one FlexE frame. The first FlexE overhead (FlexE overhead) code block is an order-set (order-set, O) code block, and the order-set code block is a type of control (control, C) code block. The second overhead code block and the third overhead code block are data (data, D) code blocks. Because remaining FlexE overhead code blocks are not defined in the standard, a type of the code block is X. One FlexE frame includes eight overhead code blocks (OH block) and 163680 data code blocks used to transmit a service. One FlexE multiframe includes 32 FlexE frames. Therefore, one FlexE multiframe has $32 \times 8$ FlexE overhead code blocks. In other words, one FlexE multiframe includes 256 overhead code blocks (OH block) and 5237760 data code blocks used to transmit a service. The third OH code block in eight OH code blocks included in each FlexE frame is used to transmit a FlexE calendar (FlexE Calendar), and the FlexE calendar is used to represent information about a service transmitted in one FlexE slot. Because one FlexE logical interface is divided into 20 FlexE slots, in the first 20 FlexE frames of the 32 FlexE frames included in the FlexE multiframe, the third FlexE overhead code block in each FlexE frame is used to transmit a FlexE calendar of one FlexE slot, and the third OH code block in each of the following 12 FlexE frames becomes a reserved field.

Because a bandwidth of one FlexE slot is 5 Gbps, an available minimum transmission bandwidth (transmission pipe) is 5 Gbps during data transmission. Therefore, for service data requiring a data bandwidth less than 5 Gbps, a serious waste of bandwidth is caused. Currently, a quantity of slots in a FlexE frame may be adjusted, to achieve an objective of adjusting a bandwidth (granularity) of the slot. Specifically, in a manner, division into FlexE slots is performed based on a FlexE multiframe or a FlexE frame, a quantity of FlexE slots is K, and a quantity of code blocks corresponding to each FlexE slot is L. A result of division is shown in Table 1.

**Table 1**

| Total quantity of code blocks included in a FlexE multiframe | Quantity (L) of code blocks corresponding to each FlexE slot | Quantity (K) of FlexE slots | Bandwidth of each FlexE slot (Gbps) | Total quantity of code blocks included in a FlexE frame | Quantity (L) of code blocks corresponding to each FlexE slot | Quantity (K) of FlexE slots | Bandwidth of each FlexE slot (Gbps) |
|---|---|---|---|---|---|---|---|
| 5237760 | 5237760 | 1 | 100 | 163680 | 163680 | 1 | 100 |
| 5237760 | 2618880 | 2 | 50 | 163680 | 81840 | 2 | 50 |
| 5237760 | 1745920 | 3 | 33.3333333 | 163680 | 54560 | 3 | 33.3333333 |
| 5237760 | 1309440 | 4 | 25 | 163680 | 40920 | 4 | 25 |
| 5237760 | 1047552 | 5 | 20 | 163680 | 32736 | 5 | 20 |
| 5237760 | 872960 | 6 | 16.6666667 | 163680 | 27280 | 6 | 16.6666667 |
| 5237760 | 748251.429 | 7 | 14.2857143 | 163680 | 23382.8571 | 7 | 14.2857143 |
| 5237760 | 654720 | 8 | 12.5 | 163680 | 20460 | 8 | 12.5 |
| 5237760 | 581973.333 | 9 | 11.1111111 | 163680 | 18186.6667 | 9 | 11.1111111 |
| 5237760 | 523776 | 10 | 10 | 163680 | 16368 | 10 | 10 |
| 5237760 | 476160 | 11 | 9.09090909 | 163680 | 14880 | 11 | 9.09090909 |
| 5237760 | 436480 | 12 | 8.33333333 | 163680 | 13640 | 12 | 8.33333333 |
| 5237760 | 402904.615 | 13 | 7.69230769 | 163680 | 12590.7692 | 13 | 7.69230769 |
| 5237760 | 374125.714 | 14 | 7.14285714 | 163680 | 11691.4286 | 14 | 7.14285714 |
| 5237760 | 349184 | 15 | 6.66666667 | 163680 | 10912 | 15 | 6.66666667 |
| 5237760 | 327360 | 16 | 6.25 | 163680 | 10230 | 16 | 6.25 |
| 5237760 | 308103.529 | 17 | 5.88235294 | 163680 | 9628.23529 | 17 | 5.88235294 |
| 5237760 | 290986.667 | 18 | 5.55555556 | 163680 | 9093.33333 | 18 | 5.55555556 |
| 5237760 | 275671.579 | 19 | 5.26315789 | 163680 | 8614.73684 | 19 | 5.26315789 |
| 5237760 | 261888 | 20 | 5 | 163680 | 8184 | 20 | 5 |
| 5237760 | 249417.143 | 21 | 4.76190476 | 163680 | 7794.28571 | 21 | 4.76190476 |
| 5237760 | 238080 | 22 | 4.54545455 | 163680 | 7440 | 22 | 4.54545455 |
| 5237760 | 227728.696 | 23 | 4.34782609 | 163680 | 7116.52174 | 23 | 4.34782609 |

EP 3 996 338 A1

(continued)

| Total quantity of code blocks included in a FlexE multiframe | Quantity (L) of code blocks corresponding to each FlexE slot | Quantity (K) of FlexE slots | Bandwidth of each FlexE slot (Gbps) | Total quantity of code blocks included in a FlexE frame | Quantity (L) of code blocks corresponding to each FlexE slot | Quantity (K) of FlexE slots | Bandwidth of each FlexE slot (Gbps) |
|---|---|---|---|---|---|---|---|
| 5237760 | 218240 | 24 | 4.16666667 | 163680 | 6820 | 24 | 4.16666667 |
| 5237760 | 209510.4 | 25 | 4 | 163680 | 6547.2 | 25 | 4 |
| 5237760 | 201452.308 | 26 | 3.84615385 | 163680 | 6295.38462 | 26 | 3.84615385 |
| 5237760 | 193991.111 | 27 | 3.7037037 | 163680 | 6062.22222 | 27 | 3.7037037 |
| 5237760 | 187062.857 | 28 | 3.57142857 | 163680 | 5845.71429 | 28 | 3.57142857 |
| 5237760 | 180612.414 | 29 | 3.44827586 | 163680 | 5644.13793 | 29 | 3.44827586 |
| 5237760 | 174592 | 30 | 3.33333333 | 163680 | 5456 | 30 | 3.33333333 |
| 5237760 | 168960 | 31 | 3.22580645 | 163680 | 5280 | 31 | 3.22580645 |
| 5237760 | 163680 | 32 | 3.125 | 163680 | 5115 | 32 | 3.125 |

It should be understood that Table 1 shows only a bandwidth corresponding to each FlexE slot in cases at which the FlexE frame or the FlexE multiframe is divided 1 to 32 FlexE slots. Alternatively, the FlexE frame or the FlexE multiframe may be divided into more FlexE slots, and a bandwidth of each FlexE slot is smaller.

A quantity of slots in a FlexE frame is adjusted, to achieve an objective of adjusting a bandwidth (granularity) of the FlexE slot.

However, in this method, a quantity of FlexE slots is directly modified, and is incompatible with the existing FlexE standard. In addition, a FlexE calendar (FlexE Calendar) further needs to be established for each FlexE slot, to indicate a service to which the FlexE slot belongs. When a quantity of service slots is too large, a quantity of entries is large. For example, if a 2M bandwidth of a slot needs to be supported, 50000 FlexE slots and 50000 entries are required. Costs of transmitting and managing the FlexE calendar are large. In another manner in which a FlexE group (group) manner is used, 20 FlexE slots are first extended into 20 x n FlexE slots, and then n FlexE multiframes are superimposed, where a quantity of code blocks in each FlexE slot remains unchanged after superimposition. Each FlexE slot includes 32 x 8 x 1023 code blocks obtained through superposing the n FlexE multiframes, each FlexE multiframe carries FlexE calendars (calendar) of 20 FlexE slots, and the n FlexE multiframes carry FlexE calendars of 20 x n FlexE slots. In this way, a 100 GB Ethernet interface is divided into 20 x n FlexE slots, a bandwidth of each FlexE slot becomes (5/n) Gbps, and 20 x n calendars need to be transmitted to a receive end. In the technology, the FlexE calendar of the FlexE slot still needs to be transmitted, to indicate a service to which the FlexE slot belongs. When a quantity of divided service slots is too large, a quantity of entries is large, and costs of transmitting and managing the calendar are large.

Therefore, how to reduce a quantity of transmitted FlexE calendars and transmission costs becomes an urgent problem to be resolved at present.

In view of this, this application provides a service data transmission method. During service data transmission, information about a data unit (for example, a quantity of data units) occupied by each piece of service data is transmitted, instead of information about service data occupied by each data unit (a FlexE calendar of each data unit). This can effectively reduce an amount of service-related information that needs to be transmitted, and reduce a resource required for transmitting service data-related information, to save transmission resources, reduce costs of maintaining the service data-related information, and improve communication efficiency.

The service data transmission method provided in this application may be applied to a plurality of communication scenarios, for example, a communication scenario in which a FlexE device (such as a router or a switch) is directly connected or connected across a transport network. A communication scenario to which this application is applicable is not limited in this embodiment of this application.

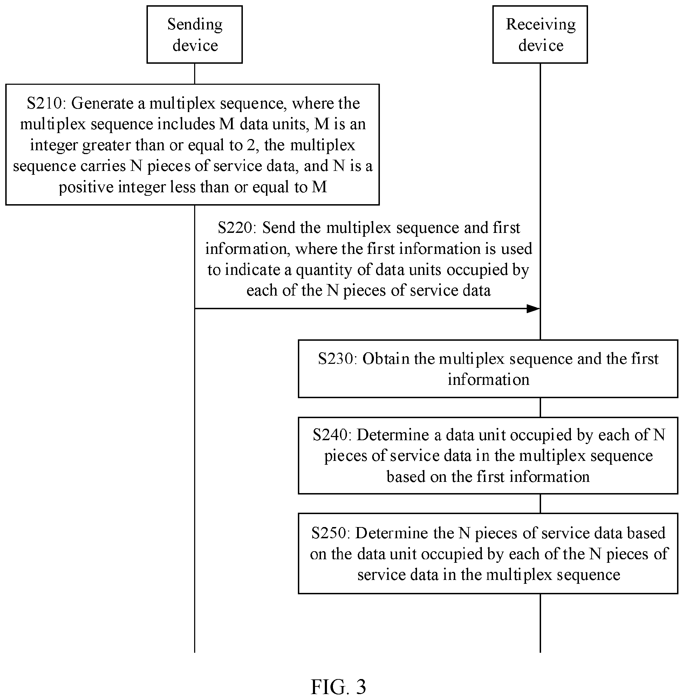

The following describes in detail the service data transmission method provided in this application with reference to FIG. 3. FIG. 3 is a schematic flowchart of a service data transmission method 200 according to an embodiment of this application. It should be understood that in this embodiment of this application, the method is described by using an example in which the method is performed by a receiving device and a sending device. As an example instead of a limitation, the method may alternatively be performed by chips, chip systems, processors, or the like applied to a receiving device and a sending device. The sending device may be a switch or a router. The receiving device may also be a switch or a router. It should be understood that the sending device and the receiving device may alternatively be other communication devices or the like. This is not limited in this embodiment of this application.

The method 200 shown in FIG. 3 may include S210 and S250. The following describes steps in the method 200 in detail with reference to FIG. 3.

S210: The sending device generates a multiplex sequence, where the multiplex sequence includes M data units, M is an integer greater than or equal to 2, the multiplex sequence carries N pieces of service data, and N is a positive integer less than or equal to M.

S220: The sending device sends the multiplex sequence and first information to the receiving device, where the first information is used to indicate a quantity of data units occupied by each of the N pieces of service data.

S230: The receiving device obtains the multiplex sequence and the first information.

S240: The receiving device determines a data unit occupied by each of the N pieces of service data in the multiplex sequence based on the first information.

S250: The receiving device determines the N pieces of service data based on the data unit occupied by each of the N pieces of service data in the multiplex sequence.

Specifically, in S210, when sending a plurality of pieces of service data to the receiving device, the sending device may first generate (create) the multiplex sequence, where the multiplex sequence includes the M data units, and M is an integer greater than or equal to 2. The multiplex sequence carries the N pieces of service data, and N is a positive integer less than or equal to M. Each data unit may correspond to one or more code blocks, and transmission time of the one or more code blocks may be one slot. For example, one data unit may correspond to one or more slots. A bandwidth corresponding to each data unit may be not greater than 5 Gbps, for example, 5 Gbps or 3 Mbps. A bandwidth of each data unit is not limited in this application. The multiplex sequence may be carried in a code block stream, that is, the sending device may generate the multiplex sequence in the code block stream. A code block in the code block stream may be a code block based on 64B/66B encoding, a code block based on 128B/130B encoding, or a code block based on other fixed-length encoding. The multiplex sequence may be a plurality of duplicate multiplex sequences, and two adjacent multiplex sequences may be continuous without an interval (for example, a slot interval). In other words, the multiplex sequence is continuous and duplicate. Optionally, the multiplex sequence may alternatively be periodic. There may alternatively be an interval between two adjacent multiplex sequences. The multiplex sequence is used to carry the N pieces of service data, and N is a positive integer less than or equal to M. In other words, the N pieces of service data are multiplexed and transmitted in the M data units.

In S220, after multiplexing the N pieces of service data in the M data units, the sending device sends the multiplex sequence to the receiving device. In addition, the sending device further sends the first information to the receiving device, where the first information is used to indicate the quantity of data units occupied by each of the N pieces of service data in the multiplex sequence. Specifically, to enable the receiving device to correctly obtain the N pieces of service data through parsing from the multiplex sequence, the sending device may send the first information to the receiving device. For example, the first information may include the quantity of data units (for example, a quantity of slots) occupied by each of the N pieces of service data in the multiplex sequence, another parameter used to indicate the quantity of data units occupied by each of the N pieces of service data in the multiplex sequence, or the like. For example, for service data at a constant bit rate (constant bit rate, CBR), a quantity of data units occupied by each piece of service data remains unchanged. In this case, the first information may include a service type identifier corresponding to each of the N pieces of service data, where the service type identifier corresponding to each piece of service data is used to indicate the quantity of data units occupied by the piece of service data in the multiplex sequence. Specific content included in the first information is not limited in this embodiment of this application.

It should be understood that in this embodiment of this application, in addition to sending, to the sending device, the first information used to indicate the quantity of data units occupied by each of the N pieces of service data in the multiplex sequence, the receiving device may further send second information and/or third information to the sending device. The second information is used to indicate a value of M, and the third information is used to indicate a value of N. Content included in the second information may directly be the value of M, or other information used to indicate the value of M. Similarly, content included in the third information may directly be the value of N, or other information used to indicate the value of N. Specific content included in the second information and the third information is not limited in this embodiment of this application.

It should further be understood that the first information may further indicate the value of M and/or the value of N.

It should further be understood that the sending device may not send one or more of the first information, M, and N to the receiving device. In this case, the quantity of data units occupied by each of the N pieces of service data in the multiplex sequence, the value of M, or the value of N may be preconfigured or predefined, and have been learned of in advance by the receiving device, or may be transmitted to the receiving device by using a control plane.

In S230, the receiving device obtains the multiplex sequence and the first information. For example, in a case in which the sending device generates the multiplex sequence in the code block stream, the sending device sends the multiplex sequence and the first information to the receiving device in the code block stream. Therefore, the receiving device needs to obtain (determine) the multiplex sequence and the first information from the code block stream.

In S240, the receiving device determines the location of the data unit occupied by each of the N pieces of service data in the multiplex sequence based on the first information. For example, the receiving device may first determine the quantity of data units occupied by each of the N pieces of service data in the multiplex sequence based on the first information, and then determine a specific location of the data unit occupied by each of the N pieces of service data in the multiplex sequence based on the quantity of data units occupied by each of the N pieces of service data in the multiplex sequence and according to a preset rule of data unit allocation, a calculation method for data unit allocation, or the like. For example, it is assumed that M is equal to 10, N is equal to 3, a quantity of data units occupied by the first piece of service data is 2, a quantity of data units occupied by the second piece of service data is 5, and a quantity of data units occupied by the third piece of service data is 2. In this case, the receiving device may determine specific locations of the 10 data units occupied by the three pieces of service data based on the quantity of data units occupied by each of the three pieces of service data and according to a preset rule of data unit allocation or a calculation method for data unit allocation. For example, the data units occupied by the first piece of service data are the first data unit to the third data unit, the data units occupied by the second piece of service data are the fourth data unit to the eighth data unit, and the data units occupied by the third piece of service data are the ninth data unit and the tenth data unit.

It should be understood that the receiving device may also determine a location of the data unit occupied by each of the N pieces of service data in the multiplex sequence based on the quantity of data units occupied by each of the N pieces of service data in the multiplex sequence and according to a preset rule of data unit allocation, a calculation method for data unit allocation, or the like.

In S250, after determining the location of the data unit occupied by each piece of service data in the multiplex sequence, the receiving device may receive and parse the piece of service data in the corresponding data unit, to obtain each piece of multiplexed service data in the multiplex sequence.

According to the service data transmission method provided in this application, during service data transmission, only information about the data unit (for example, the quantity of data units) occupied, in the multiplex sequence, by each piece of service data that is multiplexed and transmitted in the multiplex sequence needs to be sent to the receiving device, to implement accurate transmission and parsing of the multiplexed service data in the multiplex sequence. Information about a service occupied by each data unit does not need to be transmitted. Therefore, when the quantity of data units is large, a resource required for transmitting information occupied by the service data can be effectively reduced, to save transmission resources, reduce costs of maintaining the information occupied by the service data, and improve communication efficiency.

In a possible implementation, that the receiving device and the sending device determine the data unit occupied by each of the N pieces of service data in the multiplex sequence based on the quantity of data units occupied by each of the N pieces of service data includes: determining the data unit occupied by each of the N pieces of service data in the multiplex sequence based on a sequence of the N pieces of service data and the quantity of data units occupied by each piece of service data in the multiplex sequence, where data units occupied by a same piece of service data are arranged continuously.

Specifically, because a plurality of multiplex services are multiplexed in the multiplex sequence, sequences of the plurality of pieces of service data may be different. The sending device and the receiving device may start, from the first data unit in the M data units included in the multiplex sequence sequentially, allocation on a data unit to each piece of service data based on the sequence of the plurality of pieces of service data and the quantity of data units occupied by each piece of service data. If a total quantity of data units occupied by the N pieces of service data is less than M, an unused or idle data unit is located at a last location of the data units included in the multiplex sequence. Data units occupied by a same piece of service data are arranged continuously. Continuous arrangement may be understood as that a plurality of data units occupied by a same piece of service data are continuous, and no data unit occupied by another piece of service data exists between the plurality of data units.

The following is described with reference to a specific example.

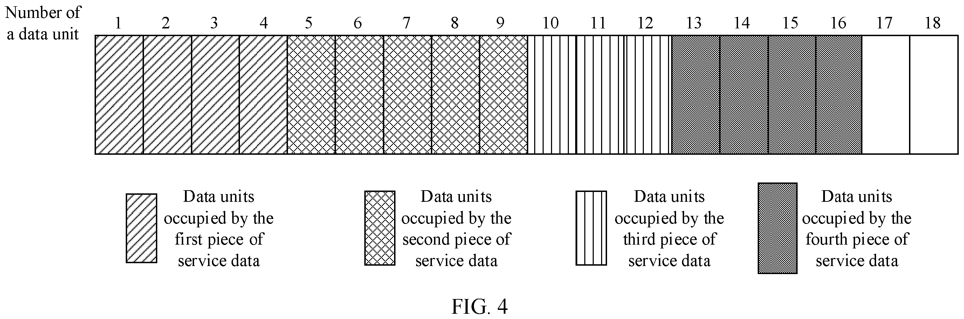

It is assumed that the multiplex sequence includes 18 data units numbered 1 to 18. Four pieces of service data are multiplexed. Four data units are required for the first piece (client 1) of service data, five data units are required for the second piece (client 2) of service data, three data units are required for the third piece (client 3) of service data, four data units are required for the fourth piece (client 4) of service data, and remaining two data units are not used. A sequence from the first piece of service data to the fourth piece of service data is arranged in a sequence from the first piece to the fourth piece. Based on the foregoing allocation manner, the data units occupied by each multiplex service are shown in FIG. 4. The first piece of service data occupies the data units 1 to 4, the second piece of service data occupies the data units 5 to 9, the third piece of service data occupies the data units 10 to 12, and the fourth piece of service data occupies the data units 13 to 16. The remaining data units are the data units 17 and 18. As shown in FIG. 4, data units occupied by a same piece of service data are arranged continuously, and no data unit occupied by another piece of service data exists between two adjacent pieces of service data.

It should be understood that the foregoing manner of allocating a data unit to each piece of service data in the multiplex sequence is merely an example, and the allocation manner should not be limited. For example, in an example shown in FIG. 4, a data unit interval may exist between data units occupied by two adjacent pieces of service data. For another example, the data units 1 to 4 may alternatively be allocated to the four data units occupied by the fourth piece (client 4) of service data. The remaining data units are allocated to the other three pieces of service data, as long as data units occupied by each piece of service data are continuous, and no data unit occupied by another piece of service data exists between the data units. A data unit allocation algorithm or allocation rule used to allocate a data unit to each piece of service data in the multiplex sequence is not limited in this application. The receiving device may alternatively determine the data unit occupied by each of the N pieces of service data in the multiplex sequence based on the foregoing allocation manner and the quantity of data units occupied by each of the N pieces of service data in the multiplex sequence.

Data units occupied by a same piece of service data are arranged continuously in the multiplex sequence. This is easy to implement. Therefore, the sending device and the receiving device can accurately and quickly determine a location of a data unit occupied by each piece of service data in the multiplex sequence. This reduces complexity of determining the location of the data unit occupied by each piece of service data in the multiplex sequence, and saves resources.

In another possible implementation, that the receiving device and the sending device determine the data unit occupied by each of the N pieces of service data in the multiplex sequence based on the quantity of data units occupied by each of the N pieces of service data includes: determining the data unit occupied by each of the N pieces of service data in the multiplex sequence based on the quantity of data units occupied by each of the N pieces of service data in the multiplex sequence and the value of M, where data units occupied by a same piece of service data are arranged discontinuously.

Specifically, when determining a location of the data unit occupied by each piece of service data in the multiplex sequence, the receiving device and the sending device may determine the location of the data unit occupied by each piece of service data in the multiplex sequence based on the quantity of data units occupied by each of the N pieces of service data in the multiplex sequence and the value of M. The receiving device may first determine the quantity of data units occupied by each piece of service data in the multiplex sequence based on the first information. Data units occupied by a same piece of service data are arranged discontinuously. Discontinuous arrangement may be understood as that a plurality of data units occupied by a same piece of service data are discontinuous, and a data unit occupied by another piece of service data exists between the plurality of data units.

For example, with reference to the foregoing example, it is assumed that the multiplex sequence includes 18 data units numbered 1 to 18. Four pieces of service data are multiplexed. Four data units are required for the first piece (client 1) of service data, five data units are required for the second piece (client 2) of service data, three data units are required for the third piece (client 3) of service data, and four data units are required for the fourth piece (client 4) of service data.

For example, a data unit occupied by each of the N pieces of service data in the multiplex sequence may be determined according to the following formula (1):

$$R_i = \frac{M}{S_i} \quad (1)$$

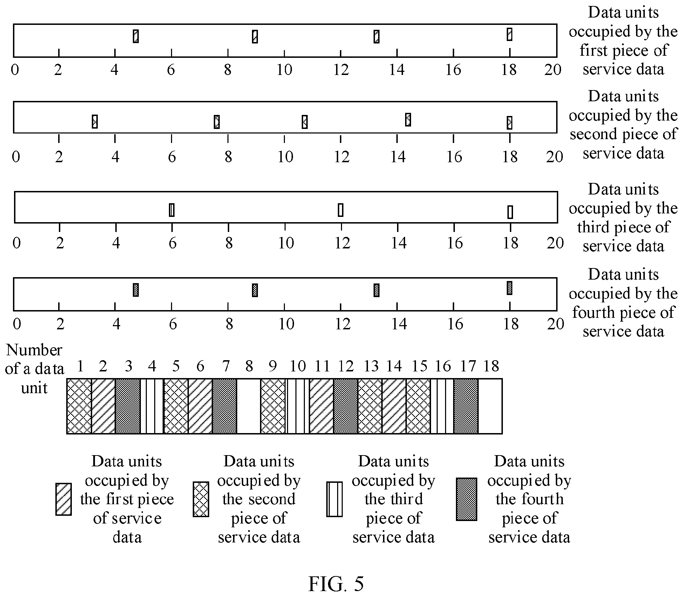

In the formula (1), $R_i$ is a data unit interval between data units occupied by an ith piece of service data in the multiplex sequence, M is a quantity of data units included in the multiplex sequence, $S_i$ is a quantity of data units occupied by the ith piece of service data, and i is a positive integer less than or equal to N. The two remaining idle data units may be considered as data units that need to be occupied by a fifth piece (client 5) of service data. According to the foregoing formula (1), the location of the data unit occupied by each piece of service data in the multiplex sequence may be determined. Based on the foregoing data unit allocation manner, the locations of the data units occupied by each multiplex service are shown in FIG. 5. The first piece of service data occupies the data unit 2, the data unit 6, the data unit 11, and the data unit 14, the second piece of service data occupies the data unit 1, the data unit 5, the data unit 9, the data unit 13, and the data unit 15, the third piece of service data occupies the data unit 4, the data unit 10, and the data unit 16, and the fourth piece of service data occupies the data unit 3, the data unit 7, the data unit 12, and the data unit 17. As shown in FIG. 5, a plurality of data units occupied by a same piece of service data are discontinuous, and a data unit occupied by another piece of service data exists between the plurality of data units.

It should be understood that the foregoing formula (1) should not limit a manner of allocating the data unit occupied by each piece of service data in the multiplex sequence. For example, in an example shown in FIG. 5, the locations of the data units occupied by each piece of service data in the multiplex sequence may be determined according to another formula, as long as data units occupied by each piece of service data are discontinuous, and a data unit occupied by another piece of service data or an idle data unit exists between the data units. A specific manner of allocating a data unit to each piece of service data in the multiplex sequence is not limited in this application. Alternatively, the receiving device and the sending device may determine the location of the data unit occupied by each of the N pieces of service data in the multiplex sequence based on a preset data unit allocation manner, the quantity of data units occupied by each piece of service data in the multiplex sequence, and the value of M.

Data units occupied by a same piece of service data are arranged discontinuously in the multiplex sequence. This can avoid congestion of service data caused by continuous arrangement of data units occupied by a same piece of service data, and improve accuracy of service data transmission and parsing, to improve accuracy of data transmission.

It should be understood that in addition to the foregoing allocation manners of discontinuous arrangement and continuous arrangement, the location of the data unit occupied by each of the N pieces of service data in the multiplex sequence may be determined by using another manner. A data unit allocation algorithm or allocation rule used to determine the location of the data unit occupied by each of the N pieces of service data in the multiplex sequence is not limited in this application.

It should also be understood that the data unit allocation algorithm or allocation rule used to determine, based on the quantity of data units occupied by each of the N pieces of service data, the data unit occupied by each of the N pieces of service data in the multiplex sequence may be preconfigured or predefined, or may be sent by the sending device to the receiving device by using the multiplex sequence or in another manner. This is not limited in this application.

In some embodiments of this application, the multiplex sequence may include at least one multiplex overhead (multiplex overhead, MOH) code block. Each data unit included in the multiplex sequence corresponds to one or more code blocks, and the first information is carried in the at least one MOH code block for transmission. In other words, the multiplex sequence and the first information are simultaneously sent.

Specifically, because each data unit included in the multiplex sequence corresponds to one or more code blocks, a code block used to transmit information related to control and management may be set in the multiplex sequence, where the code block may be referred to as an MOH code block. A data unit in which the at least one MOH code block is located may be the first data unit in the multiplex sequence. The first information may be carried in the at least one MOH code block for transmission. In other words, the sending device may send the first information to the receiving device when sending the multiplex sequence to the receiving device. After receiving the multiplex sequence, the receiving device may obtain the first information by using the at least one MOH code block included in the multiplex sequence, to determine the quantity of data units occupied by each piece of service data in the multiplex sequence. Further, the N pieces of service data may be parsed based on the foregoing manner of determining the location of the data unit occupied by each of the N pieces of service data in the multiplex sequence.

It should be understood that in addition to sending the at least one MOH code block carrying the first information to the receiving device, the sending device may further send the at least one MOH code block carrying the value of M and/or the value of N to the receiving device. This is not limited herein in this embodiment of this application.

A parameter related to the multiplex sequence is transmitted by using the MOH code block in the multiplex sequence without using extra resources, to save resources. In addition, the parameter related to the multiplex sequence and the multiplex sequence are simultaneously transmitted. This improves transmission efficiency, helps the receiving device to conveniently and quickly obtain the parameter related to the multiplex sequence, and therefore improves communication efficiency.

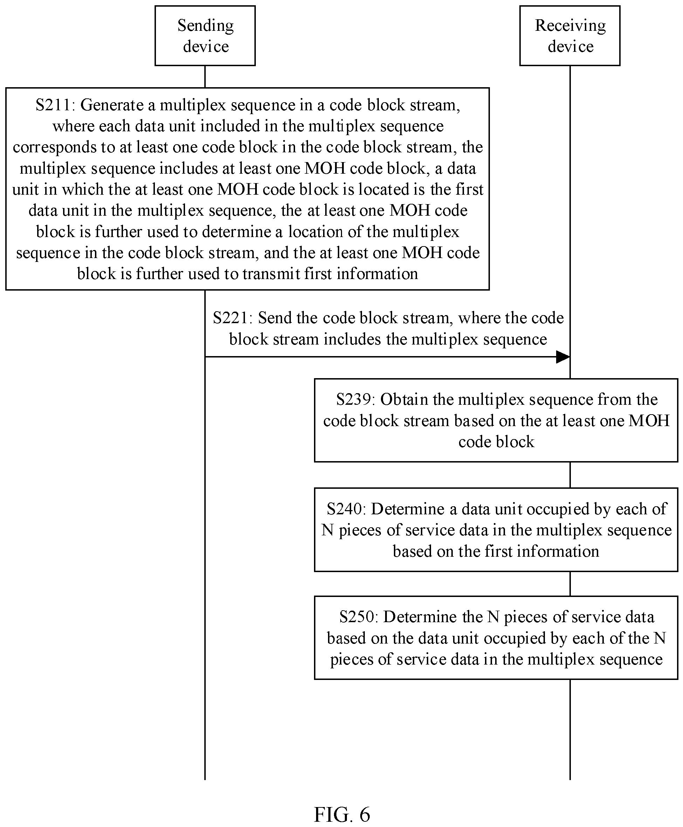

In a possible implementation, the sending device may generate (create) the multiplex sequence in the code block stream, that is, the code block stream includes the multiplex sequence. Each data unit included in the multiplex sequence corresponds to at least one code block in the code block stream. The sending device may send the multiplex sequence to the receiving device by using the code block stream. Based on method steps shown in FIG. 3, FIG. 6 shows an example.

In the method 200, S210 in which the sending device generates the multiplex sequence includes S211.

S211: The sending device generates the multiplex sequence in the code block stream, where each data unit included in the multiplex sequence corresponds to at least one code block in the code block stream. The multiplex sequence includes the at least one MOH code block, a data unit in which the at least one MOH code block is located is the first data unit in the multiplex sequence, the at least one MOH code block is a control code block, and the at least one MOH code block is further used to determine a location of the multiplex sequence in the code block stream. Optionally, the at least one MOH code block is further used to carry the first information.

In the method 200, S220 in which the sending device sends the multiplex sequence to the receiving device includes S221.

S221: The sending device sends the code block stream to the receiving device, where the code block stream includes the multiplex sequence.

In the method 200, S230 in which the receiving device obtains the multiplex sequence includes S239.

S239: The receiving device obtains the multiplex sequence from the code block stream based on the at least one MOH code block.

For step S240 and step S250 shown in FIG. 6, refer to the foregoing related description of S210, S240, and S250. For brevity, details are not described herein again.

Specifically, during service data transmission, a quantity of services may be sent to the receiving device by using the code block stream. In S211, the sending device generates (creates) the multiplex sequence in the code block stream. The code block stream includes a code block stream on a logical interface and a code block stream on a physical interface. A code block in the code block stream may be a code block based on 64B/66B encoding, or a code block based on 128B/130B encoding. Alternatively, the code block may be a code block based on other fixed-length encoding, and may define a specific control-type code block (for example, an MOH code block). The control-type code block may be used for identification or positioning in the code block stream. The receiving device may independently identify the control-type code block in the code block stream to implement positioning. For example, the code block stream may be a code block stream on a high-speed serial computer extended bus (i.e. peripheral component interconnect express, PCIE) interface or the like. The sending device may generate the multiplex sequence in the code block stream, and then send the multiplex sequence to the receiving device by using the code block stream. In the M data units included in the multiplex sequence, each data unit corresponds to at least one code block, and transmission time of the one or more code blocks may be one slot. In addition, the multiplex sequence (or the code block stream) includes the MOH code block, the MOH code block is a control code block and is used to determine the location of the multiplex sequence in the code block stream, and the data unit in which the at least one MOH code block is located is the first data unit in the multiplex sequence. For example, the at least one MOH code block may be an order-set code block. In S221, the sending device sends the code block stream to the receiving device, where the code block stream includes (or carries) the multiplex sequence. Optionally, the MOH code block is further used to carry the first information, that is, the sending device may further send both the first information and the multiplex sequence to the receiving device by using the code block stream.

In S239, the receiving device may identify the at least one MOH code block in the code block stream, to determine a start location of the multiplex sequence, and then determine the location of the multiplex sequence in the code block stream based on a length M of the multiplex sequence. If the at least one MOH code block is further used to carry the first information, in S239, the receiving device further obtains the first information.

The following is described with reference to a specific example.

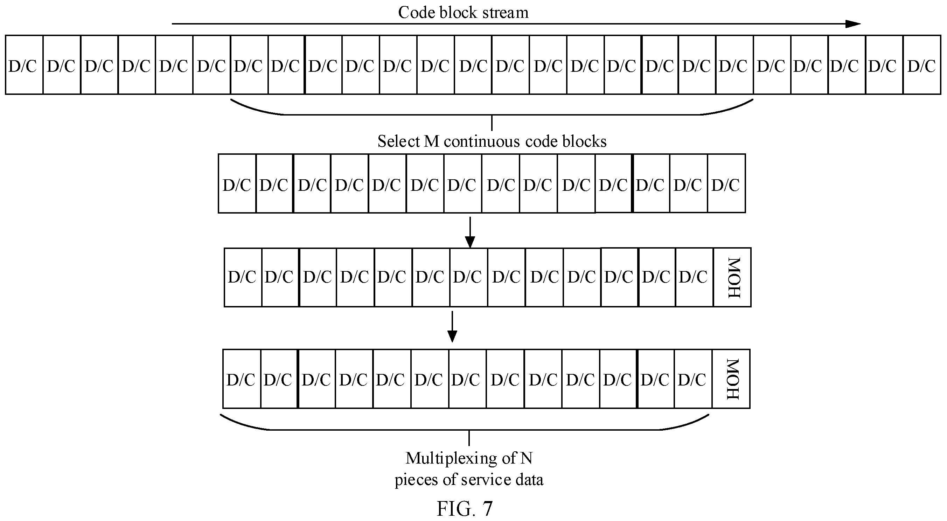

FIG. 7 is a schematic diagram of an example of generating the multiplex sequence in the 64B/66B code block stream at an Ethernet physical layer. A code block in the code block stream includes a control (control, C) code block and a data (data, D) code block. As shown in FIG. 7, each data unit in the multiplex sequence corresponds to one 64B/66B code block. The sending device may create the multiplex sequence including M data units in the code block stream, that is, M continuous code block are selected from the code block stream to generate the multiplex sequence. Then, an MOH code block is placed at a header of the multiplex sequence. In addition to transmitting the parameter (for example, M, N, or the first information) related to the multiplex sequence, the MOH code block may further be used to position the multiplex sequence in the code block stream. Then, in the multiplex sequence, the N pieces of service data are multiplexed according to the preconfigured or predefined allocation algorithm or allocation rule by using code blocks other than the MOH code block. After multiplexing the N pieces of service data in the multiplex sequence, the sending device may send the multiplex sequence by using the code block stream. After receiving the code block stream, the receiving device identifies the MOH code block, to determine the start location of the multiplex sequence, then determines the location of the multiplex sequence in the code block stream based on the length M of the multiplex sequence, and further performs demultiplexing on the N pieces of service data according to a preset data unit allocation algorithm or allocation rule. There may be a plurality of multiplex sequences, and the plurality of multiplex sequences may be continuous.

The MOH code block used to position the multiplex sequence in the code block stream is disposed in the multiplex sequence. This can conveniently and quickly position the multiplex sequence, and improve efficiency and accuracy of positioning the multiplex sequence in the code block stream.

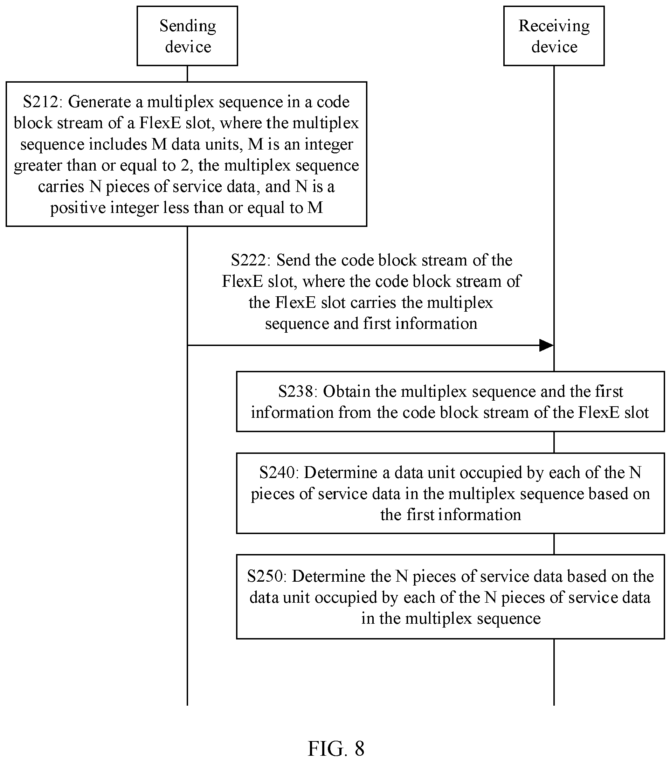

In some other embodiments of this application, because the multiplex sequence includes the M data units, and each data unit corresponds to at least one code block, the multiplex sequence may be carried in one or more FlexE slots, that is, the multiplex sequence may be transmitted in one or more FlexE slots. The sending device may generate the multiplex sequence in the code block stream of the one or more FlexE slots. The FlexE slot is used to transmit a location of a code block, where the code block corresponds to a FlexE calendar and is used to transmit the service data, and the FlexE calendar (FlexE Calendar) is used to represent service information transmitted in each FlexE slot. Based on the method steps shown in FIG. 3, FIG. 8 shows an example. In the method 200, S210 in which the sending device generates the multiplex sequence includes S212.

S212: The sending device generates the multiplex sequence in the code block stream of the FlexE slot.

In the method 200, S220 in which the sending device sends the multiplex sequence and the first information to the receiving device includes S222.

S222: The sending device sends the code block stream of the FlexE slot to the receiving device, where the code block stream of the FlexE slot carries the multiplex sequence and the first information.

In the method 200, S230 in which the receiving device obtains the multiplex sequence and the first information includes S238.

S238: The receiving device obtains the multiplex sequence and the first information from the code block stream of the FlexE slot.

For step S240 and step S250 shown in FIG. 8, refer to the foregoing related description of S240 and S250. For brevity, details are not described herein again.

Specifically, during service data transmission, the multiplex sequence may be generated (created) in the code block stream on the logical interface. The logical interface may be a FlexE logical interface, and the FlexE logical interface is divided into a plurality of (for example, 20) FlexE slots. It should be understood that, in this embodiment of this application, the FlexE logical interface may be divided into FlexE slots of any quantity, for example, 20, 50, or 100. A quantity of FlexE slots included in the FlexE logical interface is not limited in this embodiment of this application. The multiplex sequence includes the M data units, and each data unit corresponds to at least one code block, that is, the multiplex sequence may be carried in one or more FlexE slots. In S212, the sending device generates the multiplex sequence in the code block stream of the FlexE slot, where the FlexE slot may be one or more FlexE slots. For example, the FlexE slot may be one or more of 20 FlexE slots obtained after one 100 GB Ethernet interface is divided.

After creating the multiplex sequence in the code block stream of the one or more FlexE slots, in S222, the sending device sends the code block stream of the FlexE slot to the receiving device. Optionally, the first information may alternatively be carried in the code block stream in the FlexE slot. The code block stream of the FlexE slot includes the multiplex sequence and the first information.

In S238, the receiving device may obtain the multiplex sequence and the first information from the code block stream of the FlexE slot, and further perform demultiplexing on the N pieces of service data according to the preset allocation algorithm or allocation rule, to complete receiving of the plurality of pieces of service data.

The multiplex sequence is generated in the code block stream of the one or more FlexE slots and is sent to the receiving device, so that bandwidth division of the FlexE slot may be smaller. This implements flexible bandwidth division of the FlexE slot. Therefore, flexible bandwidth allocation ensures an isolation requirement of a low-bandwidth service and improves bearer efficiency.

It should be understood that in a case in which the first information may be carried in the code block stream of the FlexE slot for transmission, the receiving device may further obtain the first information from the code block stream of the FlexE slot. It is clear that the first information may not be carried in the code block stream of the FlexE slot. In other words, the sending device may send the first information to the receiving device in another manner. The first information and the multiplex sequence may be carried in different code blocks and sent to the receiving device separately.

It should be understood that for the multiplex sequence created in the code block stream of the FlexE slot, the multiplex sequence may include or may not include the MOH code block. This is not limited in this embodiment of this application.

In a possible implementation, the value of M is an integer multiple or a divisor of 1023, and the start location of the multiplex sequence overlaps with the first code block that is in a FlexE frame and that is in the code block stream of the FlexE slot or overlaps with the first code block that is in a FlexE frame and that is in the code block stream of the FlexE slot in a fixed periodicity. Each data unit corresponds to one or more code blocks.

In S238, that the receiving device obtains the multiplex sequence from the code block stream of the FlexE slot includes:

The receiving device determines the multiplex sequence in the FlexE slot based on M and the first slot that is in the FlexE frame and that is in the code block stream of the FlexE slot.

Specifically, the FlexE logical interface is divided into 20 FlexE slots. Because the first OH code block in each FlexE frame is an order-set code block, the receiving device may identify the positioning code block (the aforementioned "order-set code block) in the code block stream of the FlexE slot. Therefore, positioning of the multiplex sequence in the code block stream of the FlexE slot may be implemented by using the positioning code block. Specifically, the value of M may be set to an integer multiple or a divisor of 1023, and the start location of the multiplex sequence (the first data unit) overlaps with the first code block that is in the FlexE frame and that is in the code block stream of the FlexE slot or overlaps with the first code block that is in the FlexE frame and that is in the code block stream of the FlexE slot in the fixed periodicity. The multiplex sequence is a plurality of continuous multiplex sequences. In one case, the first data unit included in the multiplex sequence overlaps with the first code block in the FlexE frame, and the first code block in the FlexE frame is an OH code block used for positioning. In other words, the start location of the multiplex sequence is the same as a start location of the FlexE frame. In another case, the start location of the multiplex sequence overlaps with the first code block that is in the FlexE frame and that is in the code block stream of the FlexE slot in the fixed periodicity. It may be understood as that the start location of the multiplex sequence is the same as a start location of the FlexE frame after a specific periodicity. To be specific, a quantity of code blocks included in the FlexE frame is an integer multiple of the length M of the multiplex sequence, and the start location of the multiplex sequence overlaps with the first code block in a next FlexE frame after each interval of an integer multiple of multiplex sequences. Alternatively, the start location of the multiplex sequence is the same as the start location of the FlexE frame after a periodicity, that is, the length M of the multiplex sequence is an integer multiple of a quantity of code blocks included in the FlexE frame, and a start location of a next multiplex sequence overlaps with the first code block in a FlexE frame after each interval of an integer multiple of multiplex sequences.

For example, if the value of M is 1023, the length of the multiplex sequence is one FlexE row including a quantity of code blocks. A start location of the first multiplex sequence overlaps with a start location of the first FlexE row (namely, the first OH code block) included in the FlexE frame. After an interval of eight multiplex sequences, a start location of the ninth multiplex sequence overlaps with the first code block included in a next FlexE frame. For another example, if the value of M is a divisor of 1023, it is assumed that the value of M is 341. A start location of the first multiplex sequence overlaps with a start location of the first FlexE row included in the FlexE frame. After an interval of 3 multiplex sequences, a start location of the fourth multiplex sequence overlaps with a start location of the second FlexE row included in the FlexE frame. After an interval of 24 multiplex sequences, a start location of the twenty-fifth multiplex sequence overlaps with a start location of the first FlexE row included in a next FlexE frame. In other words, the start location of the multiplex sequence overlaps with the first code block that is in the FlexE frame and that is in the code block stream of the FlexE slot in the fixed periodicity.

For another example, it is assumed that the value of M is 1023 x 8, and if a start location of the first multiplex sequence overlaps with the first code block that is in the first FlexE frame and that is in the code block stream of the FlexE slot, a start location of a next multiplex sequence overlaps with the first code block that is in the second FlexE frame and that is in the code block stream of the FlexE slot. In other words, a start location of each multiplex sequence overlaps with one FlexE frame. For still another example, it is assumed that the value of M is 1023 x 8 x 4, and a start location of the first multiplex sequence overlaps with the first code block that is in the first FlexE frame and that is in the code block stream of the FlexE slot. A start location of a next multiplex sequence overlaps with the first code block that is in the fifth FlexE frame and that is in the code block stream of the FlexE slot. In other words, after each interval of 4 FlexE frames, the start location of the multiplex sequence overlaps with the first code block in the FlexE frame.

When the receiving device receives the code block stream of the FlexE slot, the start location of the multiplex sequence overlaps with the first code block that is in the FlexE frame and that is in the code block stream of the FlexE slot or overlaps with the first code block that is in the FlexE frame and that is in the code block stream of the FlexE slot in the fixed periodicity, and the first code block in the FlexE frame is a positioning code block. Therefore, the receiving device may identify the positioning code block, where the positioning code block is the start location of the multiplex sequence or a start location after an interval of a fixed quantity of multiplex sequences. After identifying the positioning code block, the receiving device may determine the multiplex sequence in the code block stream of the FlexE slot based on the length M of the multiplex sequence. Further, based on the foregoing manner of determining the location of the data unit occupied by each of the N pieces of service data in the multiplex sequence, the location of the data unit occupied by each of the N pieces of service data in the multiplex sequence is determined, and the N pieces of service data may further be parsed. The value of M is set to an integer multiple or a divisor of 1023, and the start location of the multiplex sequence is configured to overlap with the first code block that is in the FlexE frame and that is in the code block stream of the FlexE slot or overlap with the first code block that is in the FlexE frame and that is in the code block stream of the FlexE slot in the fixed periodicity. Therefore, the receiving device can quickly and accurately locate the multiplex sequence in the code block stream of the FlexE slot, to improve efficiency and accuracy of obtaining the multiplex sequence. In addition, the receiving device does not need to be notified of location information of the multiplex sequence, to reduce signaling overheads.

In another possible implementation, because the FlexE frame includes the first OH code block, the first OH code block may be the first OH code block in eight OH code blocks included in one FlexE frame. Alternatively, the first OH code block may be the second OH code block or the third OH code block in eight OH code blocks included in one FlexE frame. The first OH code block may be used to transmit a first parameter and a second parameter, the first parameter is used to indicate the value of M, the second parameter is used to indicate an offset between the first data unit in the multiplex sequence and the first code block (slot) that is in the FlexE frame and that is in the code block stream of the FlexE slot.

In S238, that the receiving device obtains the multiplex sequence from the code block stream of the FlexE slot includes:

The receiving device obtains the multiplex sequence from the code block stream of the FlexE slot based on the first parameter and the second parameter.

Specifically, the start location of the multiplex sequence is configured to overlap with the first code block that is in the FlexE frame and that is in the code block stream of the FlexE slot or overlap with the first code block that is in the FlexE frame and that is in the code block stream of the FlexE slot in the fixed periodicity. Alternatively, the start location of the multiplex sequence may be configured to not overlap with the first code block that is in the FlexE frame and that is in the code block stream of the FlexE slot. In this case, because the start location of the multiplex sequence is configured to not overlap with the first code block that is in the FlexE frame and that is in the code block stream of the FlexE slot, an offset (offset) between the start location of the multiplex sequence and the first code block that is in the FlexE frame and that is in the code block stream of the FlexE slot. Therefore, the sending device may transmit the offset to the receiving device by using the first OH code block. Optionally, the sending device may further transmit the value of M to the receiving device by using the first OH code block. M may not be limited to an integer multiple or a divisor of 1023. The receiving device may determine the start location of the multiplex sequence based on the offset between the start location of the multiplex sequence and the first code block that is in the FlexE frame and that is in the code block stream of the FlexE slot, and then determine the multiplex sequence in the code block stream of the FlexE slot based on the length M of the multiplex sequence. For example, in the first OH code block, 13 bits (bit) may be used to indicate the offset, and 13 bits (bit) may be used to indicate the value of M. The first OH code block is used to transmit M and the offset between the start location of the multiplex sequence and the first code block that is in the FlexE frame and that is in the code block stream of the FlexE slot. Therefore, the receiving device can quickly and accurately locate the multiplex sequence in the code block stream of the FlexE slot, to improve efficiency and accuracy of obtaining the multiplex sequence. Further, the N pieces of service data may be parsed based on the foregoing manner of determining the location of the data unit occupied by each of the N pieces of service data in the multiplex sequence.

In some embodiments of this application, the sending device may further transmit the value of N to the receiving device by using a FlexE multiframe. One FlexE multiframe includes 32 FlexE frames, the third OH code block in each FlexE frame is used to transmit a calendar of one FlexE slot, and the FlexE logical interface is divided into 20 FlexE slots. Therefore, one FlexE multiframe may complete transmission of calendars of 20 FlexE slots. Because the multiplex sequence carries the N pieces of service data, one FlexE multiframe may be used to transmit a multiplex identifier (multiplex identifier, MID) and a multiplex enabling identifier (multiplex enable, MEN) of one piece of service data, and N FlexE multiframes may complete transmission of MIDs and MENs of the N pieces of service data. Specifically, the MID and the MEN may be transmitted in the third OH code block in the eight OH code blocks included in the FlexE frame. For example, the third OH code block (namely, a second OH code block) included in an $i^{th}$ FlexE frame in one FlexE multiframe is used to transmit a MID and a MEN of an $i^{th}$ piece of service data, and N second OH code blocks included in the N FlexE multiframes are separately used to transmit the MIDs and MENs of the N pieces of service data. The multiplex enabling identifier is used to indicate that a plurality of pieces of service data are transmitted in the code block in the FlexE slot. The multiplex identifier of the $i^{th}$ piece of service data is used to identify the $i^{th}$ piece of service data. For example, the multiplex identifier of the $i^{th}$ piece of service data may correspond to a service identifier of the $i^{th}$ piece of service data, and i is a positive integer less than or equal to N. If the plurality of pieces of service data is not multiplexed in the FlexE slot, the MIDs corresponding to the N FlexE multiframes remain unchanged, and corresponding parameters (for example, the MENs) are all 0.

After receiving the N FlexE multiframes in the code block stream, the receiving device may determine the value of N based on the N FlexE multiframes, that is, based on the N second OH code blocks. The receiving device is notified of the value of N by using the FlexE multiframe without using extra resources, to reduce signaling overheads.

It should be understood that the receiving device may be notified of the value of N by using the FlexE multiframe or in another manner. For example, the receiving device is notified of the value of N by using the foregoing first information or the MOH code block, or in a control plane configuration manner.

In some embodiments of this application the first information is transmitted by setting the MOH code block in the multiplex sequence, or sent to the receiving device in a third OH code block included in the FlexE frame. The third OH code block may be the second OH code block in the eight OH code block included in the FlexE frame, or the third OH code block in the eight OH code blocks included in the FlexE frame. Therefore, in S230, the receiving device may obtain the first information by receiving the third OH code block. The receiving device may obtain the first information by parsing the third OH code block in the FlexE frame, to determine the quantity of data units occupied by each of the N pieces of service data in the multiplex sequence. Further, the location of the data unit occupied by each of the N pieces of service data in the multiplex sequence is determined according to the preset data unit allocation algorithm or allocation rule. The first information is carried in the third OH code block and transmitted to the receiving device, and the receiving device is notified of the first information without using extra resources, to reduce signaling overheads.

In some embodiments of this application, the value of M may be transmitted by using the foregoing first information, the MOH code block, or the first parameter. Alternatively, the sending device may further notify the receiving device of the value of M by using the FlexE multiframe. The sending device may send the FlexE multiframe to the receiving device, where the FlexE multiframe includes T fourth OH code blocks, and the T fourth OH code blocks are used to transmit the value of M. The fourth OH code block may be the second OH code block in each FlexE frame. Specifically, one FlexE multiframe includes 32 FlexE frames, and the 32 FlexE frames may be divided into two parts: 16 FlexE frames whose overhead multiframes (overhead multiframe, OMF) are 0, and 16 FlexE frames whose OMF are 1, where the second OH code block in each FlexE frame includes 1 bit. For example, the second OH code block (16 bits) included in the 16 FlexE frames is used to transmit the value of M. In the 16 bits, lower 13 bits are used to transmit M, and higher 3 bits may be set to 0. A value of T may be 16 or 32. The receiving device may obtain the value of M by receiving the fourth OH code block. The receiving device is notified of the value of M without using extra resources, to reduce signaling overheads.

According to the service data transmission method provided in this application, the multiplex sequence is generated in the code block stream, where the multiplex sequence includes the plurality of data units, each data unit corresponds to one or more code blocks, and the plurality of pieces of service data are multiplexed and transmitted in the plurality of data units. During service data transmission, the information about the data unit occupied by each piece of service data is transmitted to the receiving device, and the receiving device may perform demultiplexing on the plurality of pieces of service data according to the preset allocation rule or algorithm and based on information about the data units occupied by the plurality of pieces of service data. This can effectively reduce an amount of service-related information that needs to be transmitted, and reduce a resource required for transmission, to save transmission resources, reduce costs of maintaining the service-related information, and improve communication efficiency.

It should be understood that, in the embodiments of this application, "first", "second", and the like are merely intended to indicate that a plurality of objects are different. For example, the first OH code block and the second OH code block are merely used to represent different OH code blocks, but should not cause any impact on the OH code block, a quantity of OH code blocks, and the like. The foregoing first, second, and the like should not impose any limitation on the embodiments of this application.

It should further be understood that the division of the manners, cases, categories, and embodiments in the embodiments of this application is merely intended for ease of description, and should not constitute a particular limitation. The features in the manners, categories, cases, and embodiments may be combined without contradiction.

It should further be understood that various numbers in the embodiments of this application are merely for distinguishing for ease of description, and are not intended to limit the scope of the embodiments of this application. The sequence numbers of the foregoing processes do not mean execution sequences. The execution sequences of the processes should be determined based on functions and internal logic of the processes, and should not be construed as any limitation on the implementation processes of the embodiments of this application.

It should further be understood that, the foregoing description is merely intended to help a person skilled in the art better understand the embodiments of this application, instead of limiting the scope of the embodiments of this application. It is clear that a person skilled in the art may make various equivalent modifications or changes based on the foregoing examples. For example, in the foregoing method 200, some steps may be unnecessary or some steps may be newly added, or any two or more of the foregoing embodiments may be combined. A modified, changed, or combined solution also falls within the scope of the embodiments of this application.

It should further be understood that the foregoing description of the embodiments of this application emphasizes differences between the embodiments. For same or similar parts that are not mentioned, refer to the embodiments. For brevity, details are not described herein again.

It should further be understood that in the embodiments of this application, "predefinition" may be implemented by pre-storing corresponding code or a corresponding table in a device (for example, a terminal device or a network device) or in another manner that can be used to indicate related information. A specific implementation of "predefinition" is not limited in this application.

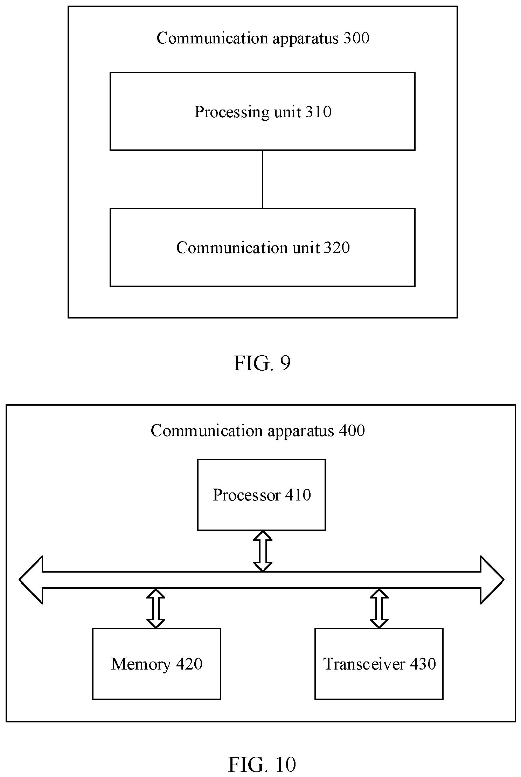

The service data transmission method in the embodiments of this application is described in detail above with reference to FIG. 1 to FIG. 8. The following describes in detail a communication apparatus in the embodiments of this application with reference to FIG. 9 to FIG. 12.

FIG. 9 is a schematic block diagram of a communication apparatus 300 according to an embodiment of this application. The communication apparatus 300 may correspond to the sending device described in the foregoing method 200, or may be a chip or a component applied to the sending device. In addition, modules or units in the communication apparatus 300 are separately configured to perform actions or processing processes performed by the sending device in the foregoing method 200. As shown in FIG. 9, the communication apparatus 300 may include a processing unit 310 and a communication unit 320.

The processing unit 310 is configured to generate a multiplex sequence, where the multiplex sequence includes M data units, M is an integer greater than or equal to 2, the multiplex sequence carries N pieces of service data, and N is a positive integer less than or equal to M.

The communication unit 320 is configured to send the multiplex sequence and first information, where the first information is used to indicate a quantity of data units occupied by each of the N pieces of service data in the multiplex sequence.

In the communication apparatus provided in this application, during service data transmission, only information about the data unit occupied, in the multiplex sequence, by each piece of service data that is multiplexed and transmitted in the multiplex sequence needs to be sent to the receiving device, to implement accurate transmission and parsing of the multiplexed service data in the multiplex sequence. Information about a service occupied by each data unit does not need to be transmitted. Therefore, when the quantity of data units is large, a resource required for transmitting information occupied by the service data can be effectively reduced, to save transmission resources, reduce costs of maintaining the information occupied by the service data, and improve communication efficiency.

Optionally, in some embodiments of this application, the processing unit 310 is further configured to determine a data unit occupied by each of the N pieces of service data in the multiplex sequence based on the quantity of data units occupied by each of the N pieces of service data in the multiplex sequence.

Optionally, in some embodiments of this application, the processing unit 310 is specifically configured to determine the data unit occupied by each of the N pieces of service data in the multiplex sequence based on a sequence of the N pieces of service data and the quantity of data units occupied by each piece of service data in the multiplex sequence, where data units occupied by a same piece of service data are arranged continuously.

Optionally, in some embodiments of this application, the processing unit 310 is specifically configured to determine the data unit occupied by each of the N pieces of service data in the multiplex sequence based on the quantity of data units occupied by each of the N pieces of service data in the multiplex sequence and a value of M, where data units occupied by a same piece of service data are arranged discontinuously.

Optionally, in some embodiments of this application, the communication unit 320 is further configured to send second information and/or third information, where the second information is used to indicate the value of M, and the third information is used to indicate a value of N.

Optionally, in some embodiments of this application, each data unit corresponds to one or more code blocks, the first information is carried in at least one multiplex overhead MOH code block, and the multiplex sequence includes the at least one MOH code block.

Optionally, in some embodiments of this application, a code block stream includes the multiplex sequence, the at least one MOH code block is a control code block, the at least one MOH code block is further used to determine a location of the multiplex sequence in the code block stream, and a data unit in which the at least one MOH code block is located is the first data unit in the multiplex sequence.

Optionally, in some embodiments of this application, the multiplex sequence is carried in one or more flexible Ethernet FlexE slots.

Optionally, in some embodiments of this application, the value of M is an integer multiple or a divisor of 1023, a start location of the multiplex sequence overlaps with the first code block that is in a FlexE frame and that is in the code block stream of the FlexE slot or overlaps with the first code block that is in a FlexE frame and that is in the code block stream of the FlexE slot in a fixed periodicity, and each data unit corresponds to one or more code blocks.

Optionally, in some embodiments of this application, a FlexE frame includes a first overhead OH code block, the first OH code block is used to transmit a first parameter and a second parameter, the first parameter is used to indicate the value of M, the second parameter is used to indicate an offset between the first data unit in the multiplex sequence and the first code block that is in the FlexE frame and that is in the code block stream of the FlexE slot, and each data unit corresponds to one or more code blocks.

Optionally, in some embodiments of this application, N FlexE multiframes include N second OH code blocks corresponding to the FlexE slots, an $i^{th}$ second OH code block in the N second OH code blocks is used to transmit a multiplex enabling identifier and a multiplex identifier of an $i^{th}$ piece of service data in the N pieces of service data, the multiplex enabling identifier is used to indicate that a plurality of pieces of service data are transmitted in the code block stream of the FlexE slot, the multiplex identifier of the $i^{th}$ piece of service data is used to identify the $i^{th}$ piece of service data, i is a positive integer less than or equal to N, and each data unit corresponds to one or more code blocks.

Optionally, in some embodiments of this application, the FlexE frame includes a third overhead OH code block, and the first information is carried in the third OH code block.

Optionally, in some embodiments of this application, the FlexE multiframe includes T fourth OH code blocks, and the T fourth OH code blocks are used to transmit the value of M.

Optionally, in some embodiments of this application, the multiplex sequence is periodic, or continuous and duplicate.

It should be understood that for a specific process in which the units in the communication apparatus 300 perform the foregoing corresponding steps, refer to the foregoing related description of the sending device with reference to the embodiments shown in FIG. 3, FIG. 6, and FIG. 8 and the related embodiments of the method 200.

For brevity, details are not described herein again.

Optionally, the communication unit 320 may include a receiving unit (module) and a sending unit (module), configured to perform steps of receiving information and sending information by the sending device in the embodiments of the foregoing method 200 and the embodiments shown in FIG. 3, FIG. 6, and FIG. 8. Optionally, the communication apparatus 300 may further include a storage unit, configured to store instructions executed by the processing unit 310 and the communication unit 320. The processing unit 310 and the communication unit 320 are connected to the storage unit. The storage unit stores the instructions, the processing unit 310 is configured to execute the instructions stored in the storage unit, and the communication unit 320 is configured to execute specific receiving and sending of a signal when driven by the processing unit 310.

It should be understood that the communication unit 320 may be a transceiver, an input/output interface, an input/output port, an interface circuit, or the like. The storage unit may be a memory. The processing unit 310 may be implemented by a processor. As shown in FIG. 10, a communication apparatus 400 may include a processor 410, a memory 420, and a transceiver 430.

The communication apparatus 300 shown in FIG. 9 or the communication apparatus 400 shown in FIG. 10 can implement steps performed by the sending device in the embodiments of the foregoing method 200 and the embodiments shown in FIG. 3, FIG. 6, and FIG. 8. For similar description, refer to description in the foregoing corresponding method. To avoid repetition, details are not described herein again.

For example, the communication apparatus 300 shown in FIG. 9 or the communication apparatus 400 shown in FIG. 10 may be a switch or a router.

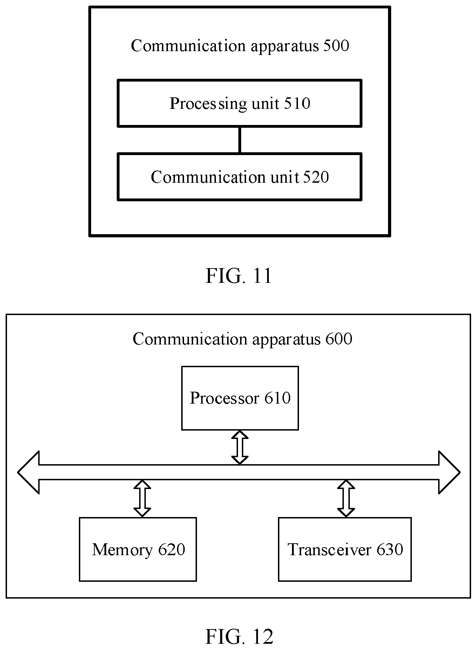

FIG. 11 is a schematic block diagram of a communication apparatus 500 according to an embodiment of this application. The communication apparatus 500 may correspond to the receiving device described in the foregoing method 200, or may be a chip or a component applied to the receiving device. In addition, modules or units in the communication apparatus 500 are separately configured to perform actions or processing processes performed by the receiving device in the foregoing method 200. As shown in FIG. 11, the communication apparatus 500 may include a processing unit 510 and a communication unit 520.

The processing unit 510 is configured to obtain a multiplex sequence, where the multiplex sequence includes M data units, M is an integer greater than or equal to 2, the multiplex sequence carries N pieces of service data, and N is a positive integer less than or equal to M.

The communication unit 520 is configured to receive first information, where the first information is used to indicate a quantity of data units occupied by each of the N pieces of service data in the multiplex sequence.

The processing unit 510 is further configured to determine a data unit occupied by each of the N pieces of service data in the multiplex sequence based on the first information.

The processing unit 510 is further configured to determine the N pieces of service data based on the data unit occupied by each of the N pieces of service data in the multiplex sequence.

In the communication apparatus provided in this application, during service data transmission, only the multiplex sequence and information about the data unit (for example, the quantity of data units) occupied, in the multiplex sequence, by each piece of service data that is multiplexed and transmitted in the multiplex sequence needs to be received, to implement accurate parsing of the multiplexed service data in the multiplex sequence. This can effectively reduce a resource required for transmitting information occupied by the service data, to save transmission resources, reduce costs of maintaining the information occupied by the service data, and improve communication efficiency.

Optionally, in some embodiments of this application, the processing unit 510 is specifically configured to determine the data unit occupied by each of the N pieces of service data in the multiplex sequence based on a sequence of the N pieces of service data and the quantity of data units occupied by each piece of service data in the multiplex sequence, where data units occupied by a same piece of service data are arranged continuously.

Optionally, in some embodiments of this application, the processing unit 510 is specifically configured to determine the data unit occupied by each of the N pieces of service data in the multiplex sequence based on the quantity of data units occupied by each of the N pieces of service data in the multiplex sequence and a value of M, where data units occupied by a same piece of service data are arranged discontinuously.

Optionally, in some embodiments of this application, the communication unit 520 is further configured to receive second information and/or third information, where the second information is used to indicate the value of M, and the third information is used to indicate a value of N.

Optionally, in some embodiments of this application, each data unit corresponds to one or more code blocks, the first information is carried in at least one multiplex overhead MOH code block, and the multiplex sequence includes the at least one MOH code block.

Optionally, in some embodiments of this application, the processing unit 510 is specifically configured to obtain the multiplex sequence in a code block stream based on the at least one MOH code block, where the at least one MOH code block is a control code block, the at least one MOH code block is further used to determine a location of the multiplex sequence in the code block stream, and a data unit in which the at least one MOH code block is located is the first data unit in the multiplex sequence.

Optionally, in some embodiments of this application, the processing unit 510 is specifically configured to obtain the multiplex sequence in one or more flexible Ethernet FlexE slots.

Optionally, in some embodiments of this application, the value of M is an integer multiple or a divisor of 1023, a start location of the multiplex sequence overlaps with the first code block that is in a FlexE frame and that is in the code block stream of the FlexE slot, and each data unit corresponds to one or more code blocks. The processing unit 510 is specifically configured to obtain the multiplex sequence from the code block stream of the FlexE slot based on M and the first code block that is in the FlexE frame and that is in the code block stream of the FlexE slot.

Optionally, in some embodiments of this application, a FlexE frame includes a first overhead OH code block, the first OH code block is used to transmit a first parameter and a second parameter, the first parameter is used to indicate the value of M, the second parameter is used to indicate an offset between the first data unit in the multiplex sequence and the first slot that is in the FlexE frame and that is in the code block stream of the FlexE slot, and each data unit corresponds to one or more code blocks. The processing unit 510 is specifically configured to obtain the multiplex sequence from the code block stream of the FlexE slot based on the first parameter and the second parameter.

Optionally, in some embodiments of this application, N FlexE multiframes include N second OH code blocks corresponding to the FlexE slots, an i$^{th}$ second OH code block in the N second OH code blocks is used to transmit a multiplex enabling identifier and a multiplex identifier of an i$^{th}$ piece of service data in the N pieces of service data, the multiplex enabling identifier is used to indicate that a plurality of pieces of service data are transmitted in the code block stream of the FlexE slot, the multiplex identifier of the i$^{th}$ piece of service data is used to identify the i$^{th}$ piece of service data, i is a positive integer less than or equal to N, and each data unit corresponds to one or more code blocks. The processing unit 510 is further configured to determine N based on the N second OH code blocks.

Optionally, in some embodiments of this application, the FlexE frame includes a third OH code block, and the third OH code block is used to transmit the first information.

Optionally, in some embodiments of this application, the FlexE multiframe includes T fourth OH code blocks, and the T fourth OH code blocks are used to transmit the value of M. The processing unit 510 is further configured to determine M based on the T fourth OH code blocks.

Optionally, in some embodiments of this application, the multiplex sequence is periodic, or continuous and duplicate.

It should be understood that for a specific process in which the units in the communication apparatus 500 perform the foregoing corresponding steps, refer to the foregoing related description of the receiving device with reference to the embodiments shown in FIG. 3, FIG. 6, and FIG. 8 and the related embodiments of the method 200. For brevity, details are not described herein again.

Optionally, the communication unit 520 may include a receiving unit (module) and a sending unit (module), configured to perform steps of receiving information and sending information by the receiving device in the embodiments of the foregoing method 200 and the embodiments shown in FIG. 3, FIG. 6, and FIG. 8. Optionally, the communication apparatus 500 may further include a storage unit, configured to store instructions executed by the processing unit 510 and the communication unit 520. The processing unit 510 and the communication unit 520 are connected to the storage unit. The storage unit stores the instructions, the processing unit 510 is configured to execute the instructions stored in the storage unit, and the communication unit 520 is configured to execute specific receiving and sending of a signal when driven by the processing unit 510.

It should be understood that the communication unit 520 may be a transceiver, an input/output interface, an input/output port, an interface circuit, or the like. The storage unit may be a memory. The processing unit 510 may be implemented by a processor. As shown in FIG. 12, a communication apparatus 600 may include a processor 610, a memory 620, and a transceiver 630.

The communication apparatus 500 shown in FIG. 11 or the communication apparatus 600 shown in FIG. 12 can implement steps performed by the receiving device in the embodiments of the foregoing method 200 and the embodiments shown in FIG. 3, FIG. 6, and FIG. 8. For similar description, refer to description in the foregoing corresponding method. To avoid repetition, details are not described herein again.

For example, the communication apparatus 500 shown in FIG. 11 or the communication apparatus 600 shown in FIG. 12 may be a switch or a router.

It should further be understood that division into the units in the apparatus is merely division into logical functions. During actual implementation, all or some of the units may be integrated into one physical entity, or may be physically separated. In addition, all the units in the apparatuses may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. Alternatively, each unit may be stored in the memory in a form of a program to be invoked by a processing element of the apparatus to execute a function of the unit. The processing element herein may also be referred to as a processor, and may be an integrated circuit having a signal processing capability. In an implementation process, the steps in the foregoing method or the foregoing units may be implemented by using a hardware integrated logic circuit of the processing element, or may be implemented in a form of software invoked by the processing element.

For example, a unit in any one of the foregoing apparatuses may be one or more integrated circuits configured to implement the foregoing method, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuits. For another example, when a unit in the apparatus is implemented by a program scheduled by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

An embodiment of this application further provides a communication system. The communication system includes the foregoing sending device and the foregoing receiving device.

An embodiment of this application further provides a computer-readable medium, configured to store computer program code. The computer program includes instructions used to perform the service data transmission method 200 in the embodiments of this application. The readable medium may be a read-only memory (read-only memory, ROM) or a random access memory (random access memory, RAM). This is not limited in this embodiment of this application.

This application further provides a computer program product. The computer program product includes instructions, and when the instructions are executed, a sending device and a receiving device perform operations corresponding to the sending device and the receiving device in the foregoing method.

An embodiment of this application further provides a chip located in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs any service data transmission method provided in the embodiments of this application.

Optionally, the computer instructions are stored in a storage unit.

Optionally, the storage unit is a storage unit in the chip, for example, a register or a cache; or the storage unit may be a storage unit in a terminal but outside the chip, for example, a read-only memory (read-only memory, ROM), another type of static storage device capable of storing static information and instructions, or a random access memory (random access memory, RAM). Any processor mentioned above may be a CPU, a microprocessor, an ASIC, or one or more integrated circuits used to control program execution of the service data transmission method. The processing unit and the storage unit may be decoupled, separately disposed on different physical devices, and connected in a wired or wireless manner to implement functions of the processing unit and the storage unit respectively, to support the system chip in implementing various functions in the foregoing embodiments. Alternatively, the processing unit and the memory may be coupled on one device.

It may be understood that the memory in the embodiments of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM and is used as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that in the embodiments of this application, "B corresponding to A" indicates that B is associated with A, and B may be determined based on A. However, it should further be understood that determining A based on B does not mean that B is determined based on A only, and B may also be determined based on A and/or other information.

Names may be assigned to various objects that may appear in this application, for example, various messages, information, devices, network elements, systems, apparatuses, actions, operations, procedures, or concepts. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

In the embodiments of this application, unless otherwise stated or there is a logic conflict, terms and/or description between different embodiments are/is consistent and may be mutually referenced, and technical features in different embodiments may be combined based on an internal logical relationship thereof, to form a new embodiment.

All or some of the methods in the embodiments of this application may be implemented by software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on the computer, the procedure or functions in the embodiments of this application are all or partially performed. The computer may be a general-purpose computer, a dedicated computer, a computer network, or another programmable apparatus. The computer programs or instructions may be stored in a computer-readable storage medium, or may be transmitted by using the computer-readable storage medium. The computer-readable storage medium may be any usable medium accessible by a computer, or a data storage device such as a server integrating one or more usable media.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing description is merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

**Claims**

1.  A service data transmission method, comprising:

    generating a multiplex sequence, wherein the multiplex sequence comprises M data units, M is an integer greater than or equal to 2, the multiplex sequence carries N pieces of service data, and N is a positive integer less than or equal to M; and
    sending the multiplex sequence and first information, wherein the first information is used to indicate a quantity of data units occupied by each of the N pieces of service data in the multiplex sequence.

2.  The method according to claim 1, wherein the method further comprises:
    determining a data unit occupied by each of the N pieces of service data in the multiplex sequence based on the quantity of data units occupied by each of the N pieces of service data in the multiplex sequence.

3.  The method according to claim 2, wherein the determining a data unit occupied by each of the N pieces of service data in the multiplex sequence based on the quantity of data units occupied by each of the N pieces of service data in the multiplex sequence comprises:
    determining the data unit occupied by each of the N pieces of service data in the multiplex sequence based on a sequence of the N pieces of service data and the quantity of data units occupied by each piece of service data in the multiplex sequence, wherein data units occupied by a same piece of service data are arranged continuously.

4.  The method according to claim 2, wherein the determining a data unit occupied by each of the N pieces of service data in the multiplex sequence based on the quantity of data units occupied by each of the N pieces of service data in the multiplex sequence comprises:
    determining the data unit occupied by each of the N pieces of service data in the multiplex sequence based on the quantity of data units occupied by each of the N pieces of service data in the multiplex sequence and a value of M, wherein data units occupied by a same piece of service data are arranged discontinuously.

5.  The method according to any one of claims 1 to 4, wherein the method further comprises:
    sending second information and/or third information, wherein the second information is used to indicate the value of M, and the third information is used to indicate a value of N.

6.  The method according to any one of claims 1 to 5, wherein each data unit corresponds to one or more code blocks, the first information is carried in at least one multiplex overhead MOH code block, and the multiplex sequence comprises the at least one MOH code block.

7.  The method according to claim 6, wherein
    a code block stream comprises the multiplex sequence, the at least one MOH code block is a control code block, the at least one MOH code block is further used to determine a location of the multiplex sequence in the code block stream, and a data unit in which the at least one MOH code block is located is the first data unit in the multiplex sequence.

8.  The method according to any one of claims 1 to 7, wherein the multiplex sequence is carried in one or more flexible Ethernet FlexE slots.

9. The method according to claim 8, wherein the value of M is an integer multiple or a divisor of 1023, a start location of the multiplex sequence overlaps with the first code block that is in a FlexE frame and that is in the code block stream of the FlexE slot or overlaps with the first code block that is in a FlexE frame and that is in the code block stream of the FlexE slot in a fixed periodicity, and each data unit corresponds to one or more code blocks.

10. The method according to claim 8, wherein a FlexE frame comprises a first overhead OH code block, the first OH code block is used to transmit a first parameter and a second parameter, the first parameter is used to indicate the value of M, the second parameter is used to indicate an offset between the first data unit in the multiplex sequence and the first code block that is in the FlexE frame and that is in the code block stream of the FlexE slot, and each data unit corresponds to one or more code blocks.

11. The method according to any one of claims 8 to 10, wherein N FlexE multiframes comprise N second OH code blocks corresponding to the FlexE slots, an $i^{th}$ second OH code block in the N second OH code blocks is used to transmit a multiplex enabling identifier and a multiplex identifier of an $i^{th}$ piece of service data in the N pieces of service data, the multiplex enabling identifier is used to indicate that a plurality of pieces of service data are transmitted in the code block stream of the FlexE slot, the multiplex identifier of the $i^{th}$ piece of service data is used to identify the $i^{th}$ piece of service data, i is a positive integer less than or equal to N, and each data unit corresponds to one or more code blocks.

12. The method according to any one of claims 8 to 11, wherein the FlexE frame comprises a third overhead OH code block, and the first information is carried in the third OH code block.

13. The method according to any one of claims 8 to 12, wherein the FlexE multiframe comprises T fourth OH code blocks, and the T fourth OH code blocks are used to transmit the value of M.

14. The method according to any one of claims 1 to 13, wherein the multiplex sequence is periodic, or continuous and duplicate.

15. A service data transmission method, comprising:

obtaining a multiplex sequence and first information, wherein the multiplex sequence comprises M data units, M is an integer greater than or equal to 2, the multiplex sequence carries N pieces of service data, N is a positive integer less than or equal to M, and the first information is used to indicate a quantity of data units occupied by each of the N pieces of service data in the multiplex sequence;
determining a data unit occupied by each of the N pieces of service data in the multiplex sequence based on the first information; and
determining the N pieces of service data based on the data unit occupied by each of the N pieces of service data in the multiplex sequence.

16. The method according to claim 15, wherein the determining a data unit occupied by each of the N pieces of service data in the multiplex sequence based on the first information comprises:
determining the data unit occupied by each of the N pieces of service data in the multiplex sequence based on a sequence of the N pieces of service data and the quantity of data units occupied by each piece of service data in the multiplex sequence, wherein data units occupied by a same piece of service data are arranged continuously.

17. The method according to claim 15, wherein the determining a data unit occupied by each of the N pieces of service data in the multiplex sequence based on the first information comprises:
determining the data unit occupied by each of the N pieces of service data in the multiplex sequence based on the quantity of data units occupied by each of the N pieces of service data in the multiplex sequence and a value of M, wherein data units occupied by a same piece of service data are arranged discontinuously.

18. The method according to any one of claims 15 to 17, wherein the method further comprises:
receiving second information and/or third information, wherein the second information is used to indicate the value of M, and the third information is used to indicate a value of N.

19. The method according to any one of claims 15 to 18, wherein each data unit corresponds to one or more code blocks, the first information is carried in at least one multiplex overhead MOH code block, and the multiplex sequence comprises the at least one MOH code block.

**20.** The method according to claim 19, wherein
the obtaining a multiplex sequence comprises:
obtaining the multiplex sequence from a code block stream based on the at least one MOH code block, wherein the at least one MOH code block is a control code block, the at least one MOH code block is further used to determine a location of the multiplex sequence in the code block stream, and a data unit in which the at least one MOH code block is located is the first data unit in the multiplex sequence.

**21.** The method according to any one of claims 15 to 20, wherein
the obtaining a multiplex sequence comprises:
obtaining the multiplex sequence from one or more flexible Ethernet FlexE slots.

**22.** The method according to claim 21, wherein the value of M is an integer multiple or a divisor of 1023, a start location of the multiplex sequence overlaps with the first code block that is in a FlexE frame and that is in the code block stream of the FlexE slot, and each data unit corresponds to one or more code blocks; and
the obtaining the multiplex sequence from one or more flexible Ethernet FlexE slots comprises:
obtaining the multiplex sequence from the code block stream of the FlexE slot based on M and the first code block that is in the FlexE frame and that is in the code block stream of the FlexE slot.

**23.** The method according to claim 21, wherein a FlexE frame comprises a first overhead OH code block, the first OH code block is used to transmit a first parameter and a second parameter, the first parameter is used to indicate the value of M, the second parameter is used to indicate an offset between the first data unit in the multiplex sequence and the first code block that is in the FlexE frame and that is in the code block stream of the FlexE slot, and each data unit corresponds to one or more code blocks; and
the obtaining the multiplex sequence from one or more flexible Ethernet FlexE slots comprises:
obtaining the multiplex sequence from the code block stream of the FlexE slot based on the first parameter and the second parameter.

**24.** The method according to any one of claims 21 to 23, wherein N FlexE multiframes comprise N second OH code blocks corresponding to the FlexE slots, an $i^{th}$ second OH code block in the N second OH code blocks is used to transmit a multiplex enabling identifier and a multiplex identifier of an $i^{th}$ piece of service data in the N pieces of service data, the multiplex enabling identifier is used to indicate that a plurality of pieces of service data are transmitted in the code block stream of the FlexE slot, the multiplex identifier of the $i^{th}$ piece of service data is used to identify the $i^{th}$ piece of service data, i is a positive integer less than or equal to N, and each data unit corresponds to one or more code blocks; and
the method further comprises:
determining N based on the N second OH code blocks.

**25.** The method according to any one of claims 21 to 24, wherein the FlexE frame comprises a third OH code block, and the third OH code block is used to transmit the first information.

**26.** The method according to any one of claims 21 to 25, wherein the FlexE multiframe comprises T fourth OH code blocks, and the T fourth OH code blocks are used to transmit the value of M; and
the method further comprises:
determining M based on the T fourth OH code blocks.

**27.** The method according to any one of claims 15 to 26, wherein the multiplex sequence is periodic, or continuous and duplicate.

**28.** A communication apparatus, comprising a unit configured to perform steps in the method according to any one of claims 1 to 14.

**29.** A communication apparatus, comprising a unit configured to perform steps in the method according to any one of claims 15 to 27.

**30.** A communication apparatus, comprising at least one processor and an interface circuit, wherein the interface circuit is used by the at least one processor to obtain a program or instructions in at least one memory, and the at least one processor is configured to execute the program or the instructions, to enable the communication apparatus to perform the method according to any one of claims 1 to 14.

31. A communication apparatus, comprising at least one processor and an interface circuit, wherein the interface circuit is used by the at least one processor to obtain a program or instructions in at least one memory, and the at least one processor is configured to execute the program or the instructions, to enable the communication apparatus to perform the method according to any one of claims 15 to 27.

32. A computer-readable medium, wherein the computer-readable medium stores program code, and when the computer program code is run on a computer, the computer is enabled to perform the method according to any one of claims 1 to 27.

FlexE row
(1023 multiplex
periodicities)

20 code blocks      20 code blocks      20 code blocks

Slot 0      Slot 0      Slot 19      Slot 0      Slot 19
            Slot 19

Overhead
code block

Overhead
code block

FIG. 1

FIG. 2

```
┌──────────────┐                                      ┌──────────────┐
│   Sending    │                                      │  Receiving   │
│   device     │                                      │   device     │
└──────┬───────┘                                      └──────┬───────┘
       │                                                     │
┌──────┴────────────────────────────────────┐               │
│ S210: Generate a multiplex sequence, where │               │
│ the multiplex sequence includes M data     │               │
│ units, M is an integer greater than or     │               │
│ equal to 2, the multiplex sequence carries │               │
│ N pieces of service data, and N is a       │               │
│ positive integer less than or equal to M   │               │
└───────────────────┬────────────────────────┘               │
                    │                                         │
     S220: Send the multiplex sequence and first             │
     information, where the first information is used         │
     to indicate a quantity of data units occupied by        │
     each of the N pieces of service data                     │
                    │───────────────────────────────────────▶│
                    │           ┌─────────────────────────────┴──────┐
                    │           │ S230: Obtain the multiplex sequence │
                    │           │ and the first information           │
                    │           └─────────────────┬──────────────────┘
                    │           ┌─────────────────┴──────────────────┐
                    │           │ S240: Determine a data unit occupied│
                    │           │ by each of N pieces of service data │
                    │           │ in the multiplex sequence based on  │
                    │           │ the first information               │
                    │           └─────────────────┬──────────────────┘
                    │           ┌─────────────────┴──────────────────┐
                    │           │ S250: Determine the N pieces of     │
                    │           │ service data based on the data unit │
                    │           │ occupied by each of the N pieces of │
                    │           │ service data in the multiplex       │
                    │           │ sequence                            │
                    │           └─────────────────┬──────────────────┘
                    │                             │
```

FIG. 3

| 1 | 2 | 3 | 4 | 5 | 6 | 7 | 8 | 9 | 10 | 11 | 12 | 13 | 14 | 15 | 16 | 17 | 18 |

Data units
occupied by the
first piece of
service data

Data units
occupied by the
second piece of
service data

Data units
occupied by the
third piece of
service data

Data units
occupied by the
fourth piece of
service data

FIG. 4

EP 3 996 338 A1

FIG. 5

```
┌──────────────┐                          ┌──────────────┐
│   Sending    │                          │  Receiving   │
│   device     │                          │   device     │
└──────┬───────┘                          └──────┬───────┘
```

S211: Generate a multiplex sequence in a code block stream, where each data unit included in the multiplex sequence corresponds to at least one code block in the code block stream, the multiplex sequence includes at least one MOH code block, a data unit in which the at least one MOH code block is located is the first data unit in the multiplex sequence, the at least one MOH code block is further used to determine a location of the multiplex sequence in the code block stream, and the at least one MOH code block is further used to transmit first information

S221: Send the code block stream, where the code block stream includes the multiplex sequence

S239: Obtain the multiplex sequence from the code block stream based on the at least one MOH code block

S240: Determine a data unit occupied by each of N pieces of service data in the multiplex sequence based on the first information

S250: Determine the N pieces of service data based on the data unit occupied by each of the N pieces of service data in the multiplex sequence

FIG. 6

Code block stream

Select M continuous code blocks

Multiplexing of N
pieces of service data

MOH

FIG. 7

```
┌─────────────┐                              ┌─────────────┐
│   Sending   │                              │  Receiving  │
│   device    │                              │   device    │
└──────┬──────┘                              └──────┬──────┘
```

S212: Generate a multiplex sequence in a code block stream of a FlexE slot, where the multiplex sequence includes M data units, M is an integer greater than or equal to 2, the multiplex sequence carries N pieces of service data, and N is a positive integer less than or equal to M

S222: Send the code block stream of the FlexE slot, where the code block stream of the FlexE slot carries the multiplex sequence and first information

S238: Obtain the multiplex sequence and the first information from the code block stream of the FlexE slot

S240: Determine a data unit occupied by each of the N pieces of service data in the multiplex sequence based on the first information

S250: Determine the N pieces of service data based on the data unit occupied by each of the N pieces of service data in the multiplex sequence

FIG. 8

Communication apparatus 300

Processing unit 310

Communication unit 320

FIG. 9

Communication apparatus 400

Processor 410

Memory 420

Transceiver 430

FIG. 10

Communication apparatus 500

Processing unit 510

Communication unit 520

FIG. 11

Communication apparatus 600

Processor 610

Memory 620

Transceiver 630

FIG. 12

## INTERNATIONAL SEARCH REPORT

| | International application No. |
|---|---|
| | **PCT/CN2020/102533** |

**A.    CLASSIFICATION OF SUBJECT MATTER**

H04L 12/911(2013.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT; CNKI; EPODOC; WPI; IEEE: 灵活以太网, 灵活光网络, 复用, 映射, 数据单元, 数量, 比例, 位置, 业务, 业务映射表, 业务日历, 时隙, 开销, FlexE, multiplex, map, data unit, number, ratio, position, service, calendar, slot, overhead

**C.    DOCUMENTS CONSIDERED TO BE RELEVANT**

| Category* | Citation of document, with indication, where appropriate, of the relevant passages | Relevant to claim No. |
|---|---|---|
| A | CN 107888516 A (ZTE CORPORATION) 06 April 2018 (2018-04-06) description paragraphs [0082]-[0104], figure 6 | 1-32 |
| A | CN 108011702 A (HUAWEI TECHNOLOGIES CO., LTD.) 08 May 2018 (2018-05-08) entire document | 1-32 |
| A | CN 109391461 A (HUAWEI TECHNOLOGIES CO., LTD.) 26 February 2019 (2019-02-26) entire document | 1-32 |
| A | US 2016119075 A1 (GAREAU, Sebastien et al.) 28 April 2016 (2016-04-28) entire document | 1-32 |
| A | 占治国 等 (ZHAN, Zhiguo et al.). "基于灵活以太网技术的传送网 (Non-official translation: Transport Network Based on Flexible Ethernet Technology)" 电信快报 (Telecommunications Information), 10 January 2018 (2018-01-10), entire document | 1-32 |
| A | ZHANG, Sen et al. "Hybrid Multiplexing over FlexE Group" *IEEE The 23rd OptoElectronics and Communications Conference (OECC 2018) Technical Digest*, 06 July 2018 (2018-07-06), entire document | 1-32 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2020** | **27 October 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/102533**

| Patent document cited in search report | | | Publication date (day/month/year) | Patent family member(s) | | | Publication date (day/month/year) |
|---|---|---|---|---|---|---|---|
| CN | 107888516 | A | 06 April 2018 | EP | 3522465 | A1 | 07 August 2019 |
| | | | | WO | 2018059446 | A1 | 05 April 2018 |
| CN | 108011702 | A | 08 May 2018 | EP | 3525379 | A1 | 14 August 2019 |
| | | | | WO | 2018077095 | A1 | 03 May 2018 |
| | | | | US | 2019253178 | A1 | 15 August 2019 |
| CN | 109391461 | A | 26 February 2019 | WO | 2019029419 | A1 | 14 February 2019 |
| | | | | EP | 3664390 | A1 | 10 June 2020 |
| | | | | US | 2020195760 | A1 | 18 June 2020 |
| | | | | KR | 20200035142 | A | 01 April 2020 |
| US | 2016119075 | A1 | 28 April 2016 | EP | 3013017 | A1 | 27 April 2016 |
| | | | | US | 2016119076 | A1 | 28 April 2016 |

Form PCT/ISA/210 (patent family annex) (January 2015)

**EP 3 996 338 A1**

**Patent documents cited in the description**

- CN 201910682324